# EUROPÄISCHE PATENTSCHRIFT

(11) **EP 3 551 882 B1**
(45) Veröffentlichungstag und Bekanntmachung des Hinweises auf die Patenterteilung: **09.06.2021**
(21) Anmeldenummer: 17825424.9
(22) Anmeldetag: 12.12.2017
(51) Int. Cl.: F04B 1/00, F04B 1/04, F04B 1/20, F04B 1/0408, F04B 1/2035

(54) **KOLBENPUMPE UND IHRE VERWENDUNG IN EINER WINDKRAFTANLAGE**
PISTON PUMP AND ITS USE IN A WIND POWER SYSTEM
POMPE À PISTONS ET SON UTILISATION DANS UNE INSTALLATION ÉOLIENNE

(30) Priorität: 12.12.2016 DE 102016124048
(43) Veröffentlichungstag der Anmeldung: 16.10.2019
(73) Patentinhaber: KAMAT GmbH & Co. KG, 58454 Witten-Annen (DE)
(72) Erfinder: SPRAKEL, Jan G., 58453 Witten (DE)
(74) Vertreter: Cohausz & Florack
(86) Internationale Anmeldenummer: PCT/EP2017/082402
(87) Internationale Veröffentlichungsnummer: WO 2018/108894

(56) Entgegenhaltungen:
- EP-A1- 2 821 638
- EP-A2- 2 154 368
- WO-A1-2012/022952
- WO-A2-2013/080399

## Beschreibung

Die Erfindung betrifft eine Kolbenpumpe, insbesondere Axialkolbenpumpe oder Radialkolbenpumpe mit großer Fördermenge bei geringer Drehzahl, umfassend: ein Gestell, ein Steuerelement, das um eine Mittelachse herum drehbar gelagert ist und wenigstens eine Steuerfläche aufweist, mehrere Zylinder mit jeweils einem darin verschiebbaren Kolben, einen Sauganschluss zum Einströmen eines Fluids in die Zylinder der Kolbenpumpe, und einen Druckanschluss zum Ausströmen des Fluids aus den Zylindern der Kolbenpumpe, wobei die Zylinder durch Leitungen mit dem Sauganschluss und mit dem Druckanschluss verbunden sind, wobei die Zylinder, die Kolben und das Steuerelement derart gestaltet und angeordnet sind, dass die Stellungen der Kolben in den Zylindern durch eine Bewegung des Steuerelementes veränderbar sind, und wobei die Zylinder und die Kolben derart gelagert sind, dass sich die Zylinder und die Kolben bei einer Drehung des Steuerelements nicht vollständig um die Mittelachse herum mitdrehen.

Die Erfindung betrifft zudem die Verwendung einer Kolbenpumpe in einer Windkraftanlage.

Axialkolbenpumpen sind - wie alle Pumpen - Vorrichtungen zur Umwandlung von mechanischer Energie in hydraulische Energie. Bei Axialkolbenpumpen handelt es sich um Kolbenpumpen, bei denen die Achsen der Zylinder und/oder Kolben parallel zur Antriebsachse der Pumpe und somit "axial" - verlaufen. Typische Bauformen von Axialkolbenpumpen sind Schrägachsenpumpen und Schrägscheibenpumpen.

Axialkolbenpumpen zeichnen sich durch hohe Förderdrucke aus und weisen - im Gegensatz zu Radialkolbenpumpen - einen geringen Durchmesser auf; Axialkolbenpumpen sind daher zwar in axialer Richtung eher lang, aber in radialer Richtung sehr kompakt gebaut.

Bei Radialkolbenpumpen handelt es sich hingegen um Kolbenpumpen, bei denen die Achsen der Zylinder und/oder Kolben radial zur Antriebsachse der Pumpe verlaufen. Radialkolbenpumpen weisen zwar einen größeren Durchmesser auf, sind aber in axialer Richtung sehr kompakt gebaut.

Um einen möglichst gleichmäßigen Druckverlauf und große Fördermengen zu erreichen, weisen Axialkolbenpumpen meist mehrere Zylinder und Kolben auf, die in Umfangsrichtung um eine Antriebsachse herum verteilt sind. Die Anzahl der Zylinder und Kolben kann weiter erhöht werden, indem mehrere Gruppen oder Reihen von Zylindern und Kolben vorgesehen sind. Auf diese Weise können die Zylinder und Kolben derart angeordnet werden, dass jeweils zwei Zylinder und/oder Kolben sich gegenläufig bewegen und spiegelverkehrt stets in der gleichen Position befinden (wie bei einem Hubkolbenmotor in der Bauform eines "Boxermotors"). Derartige doppelreihige Axialkolbenpumpen sind beispielsweise aus der WO 2004/055369 A1 und der WO 2007/054319 A1 bekannt.

Bei den doppelreihige Axialkolbenpumpen aus der WO 2004/055369 A1 und aus der WO 2007/054319 A1 ist vorgesehen, dass die Antriebswelle mit zwei Reihen von axial (also parallel zur Antriebswelle) angeordneten Kolben verbunden ist, so dass eine Rotation der Antriebswelle eine Rotation der Kolben zur Folge hat. Da die Kolben verschiebbar in Zylindern geführt sind, führt eine Rotation der Kolben um die Antriebsachse zu einer Rotation der Zylinder um die Antriebsachse. Um bei der Rotation der Antriebsachse eine Veränderung des Zylindervolumens zu erreichen, sind die Zylinder nicht vollständig axial, sondern schräg angeordnet. Dies wird dadurch erreicht, dass die Zylinder auf einer Schrägscheibe abgleiten, die geneigt ist.

Ein Vorteil dieser Axialkolbenpumpen liegt darin, dass aufgrund des doppelreihigen Aufbaus mit einer Antriebswelle eine große Anzahl von Kolben und Zylindern bewegt werden können. Nachteilig ist jedoch die Schräglage der Zylinder, die dazu führt, dass die Form der Kolben aufwändig gestaltet werden muss und zudem die Abdichtung zwischen Kolben und Zylindern erschwert. Ein weiterer Nachteil liegt in der Relativbewegung zwischen Zylindern und Schrägscheibe, die den Verschleiß erhöht und die Abdichtung der Kontaktfläche erschwert. Zudem ist die Gestaltung der Einlässe und Auslässe bei rotierenden Zylindern kompliziert und muss beispielsweise durch ringförmige Nuten realisiert werden. Diese Nachteile sind besonders unerwünscht, wenn hohe Drücke bei geringem Wartungsaufwand erforderlich sind, beispielsweise bei schwer zugänglichen Einsatzorten wie Windkraftanlagen.

Auch bei Radialkolbenpumpen sind mehrreihige Kolbenpumpen bekannt, beispielsweise aus der WO 2012/073280 A1. Bei der dort beschriebenen Lösung sind mehrere Reihen von Kolben und Zylindern in axialer Richtung hintereinander angeordnet. Bei der dort beschrieben Lösung weisen die Kolben an ihren aus den Zylindern herausragenden Enden starre zylindrische Körper auf, die auf einem mehrteiligen und wellenförmigen Nockenring abgleiten sollen und dabei die Zylinder in die Kolben einschieben sollen. Aufgrund der hohen Gleitreibung zwischen dem Nockenring und den zylindrischen Körpern kann der Kontakt zwischen dem Nockenring und den zylindrischen Körpern nur ein einem mit Öl gefüllten Raum stattfinden, was den Aufbau und die Abdichtung der gesamten Vorrichtung sehr kompliziert macht. Zudem erhöht das Öl den Drehwiderstand, was den Wirkungsgrad der Vorrichtung verringert. Als Arbeitsfluid und als Schmiermedium wird daher Öl eingesetzt, was bei Undichtigkeiten ökologisch problematisch ist (beispielsweise bei einem Einsatz im Offshore-Bereich).

Weiter, ist eine Kolbenpumpe nach dem Oberbegriff von Anspruch 1 bekannt aus dem Dokument WO 2013 080399 A2 bzw. EP 2 154 368 A2 bzw. EP 2 821 638 A1.

Der Erfindung liegt die Aufgabe zugrunde, bei einer Kolbenpumpe nach dem Oberbegriff von Anspruch 1 die Gefahr von austretendem Schmiermittel zu vermeiden.

Diese Aufgabe wird durch eine Kolbenpumpe nach Anspruch 1 gelöst.

Die Erfindung betrifft eine Kolbenpumpe mit großer Fördermenge bei geringer Drehzahl; insbesondere kann es sich um eine Axialkolbenpumpe oder um eine Radialkolbenpumpe handeln. Beispielsweise kann die Pumpe eine Fördermenge von wenigstens 1000 Liter pro Minute, vorzugsweise von mehreren Tausend Litern pro Minute aufweisen und eine Drehzahl von 20 Umdrehungen pro Minute oder weniger aufweisen. Die Axialkolbenpumpe umfasst zunächst ein Gestell, das beispielsweise eine Vorderwand und eine Rückwand aufweisen kann. Die Kolbenpumpe umfasst zudem ein Steuerelement, das um eine Mittelachse herum drehbar gelagert ist und wenigstens eine Steuerfläche aufweist. Das Steuerelement mit seiner Steuerfläche dient dazu, die Relativbewegung zwischen Kolben und Zylindern zu steuern. Vorzugsweise ist das Steuerelement vollständig umlaufend gestaltet und beispielsweise scheibenförmig oder ringförmig gestaltet. Bei einer ringförmigen Gestaltung kann beispielsweise vorgesehen sein, dass das Steuerelement durch Speichen mit einer Nabe verbunden ist, die auf eine Antriebswelle aufgepresst ist. Die in Umfangsrichtung geschlossene Gestaltung hat den Vorteil, dass das Steuerelement entlang seines gesamten Umfangs zur Steuerung der Kolben eingesetzt werden kann und somit eine stufenlose Veränderung der Kolbenstellungen bewirken kann. Zudem umfasst die Kolbenpumpe mehrere Zylinder mit jeweils einem darin verschiebbaren Kolben. Die Zylinder und die Kolben können in mehreren Gruppen angeordnet sein, die axial oder radial voneinander beabstandet sein können. Weiterhin umfasst die Kolbenpumpe einen Sauganschluss zum Einströmen eines Fluids in die Zylinder der Kolbenpumpe, und einen Druckanschluss zum Ausströmen des Fluids aus den Zylindern der Kolbenpumpe, wobei die Zylinder durch Leitungen mit dem Sauganschluss und mit dem Druckanschluss verbunden sind. Die Kolbenpumpe zeichnet sich dadurch aus, dass die Zylinder, die Kolben und das Steuerelement derart gestaltet und angeordnet sind, dass die Stellungen der Kolben in den Zylindern durch eine Bewegung des Steuerelementes veränderbar sind. Das Steuerelement kann insbesondere durch eine Rotation bewegt werden. Die Kolbenpumpe zeichnet sich zudem dadurch aus, dass die Zylinder und die Kolben derart gelagert sind, dass sich die Zylinder und die Kolben bei einer Drehung des Steuerelements nicht vollständig um die Mittelachse herum mitdrehen. Vorzugsweise drehen sich die Zylinder und die Kolben - im Gegensatz zum Steuerelement - überhaupt nicht; es reicht jedoch aus, dass die Zylinder und Kolben an wenigstens einem Punkt befestigt sind (z.B. durch eine Verankerung an dem Gestell) und im Übrigen beweglich sind - beispielsweise schwenkbar gelagert sind. Die Anzahl der "Pumpenelemente" (also der Einheiten aus Zylindern und Kolben) kann beispielsweise wenigstens sechs, insbesondere wenigstens acht oder wenigstens zehn betragen und beispielsweise im Bereich zwischen sechs und dreißig liegen.

Es ist vorgesehen, dass die Zylinder oder die Kolben mit jeweils einer drehbar gelagerten Rolle verbunden sind. Konstruktiv einfacher und insoweit bevorzugt ist es, dass die Kolben mit jeweils einer drehbar gelagerten Rolle verbunden sind während die Zylinder keine Rollen aufweisen. Gleichwohl wäre es alternativ auch umgekehrt möglich, die Zylinder anstelle der Kolben mit drehbar gelagerten Rollen zu versehen. Beispielhaft soll die Funktion der Rollen anhand von an den Kolben angeordneten Rollen erläutert werden: Die Rollen dienen dem Zweck, auf den Steuerflächen des Steuerelementes abzurollen und den Kolben in axialer Richtung zu führen, also - je nach Verlauf der Steuerfläche - in den Zylinder einzuschieben oder aus dem Zylinder herauszulassen. Die Führung durch drehbar gelagerte Rollen hat im Gegensatz zu aufeinander abgleitenden Bauteilen den Vorteil einer besonders geringen Reibung (Rollreibung ist meist geringer als Gleitreibung). Dies hat den erheblichen Vorteil, dass die Schmierung vereinfacht wird. Es kann beispielsweise vorgesehen sein, dass jede Rolle eine gekapselte interne Schmierung aufweist, so dass auf eine Ölschmierung der übrigen Kolbenpumpe vollständig verzichtet werden kann. Der Kontakt zwischen den Rollen und dem Steuerelement erfolgt in einem schmierstofffreien Raum - das Abrollen erfolgt also "trocken". Dies eröffnet neue Einsatzgebiete, beispielsweise den Betrieb mit Wasser, insbesondere Salzwasser bzw. Meerwasser anstelle des üblichen Betriebs mit Öl.

Nach einer Ausgestaltung der Kolbenpumpe ist vorgesehen, dass die Zylinder oder die Kolben relativ zu dem Gestell ortsfest und/oder schwenkbar angeordnet sind. Bei dieser Ausgestaltung sollen also die Zylinder oder die Kolben nicht nur in Umfangsrichtung bzw. in tangentialer Richtung fixiert sein, sondern insgesamt (also in jede Richtung) ortsfest sein. Natürlich können nur entweder die Zylinder oder die Kolben ortsfest mit dem Gestell verbunden sein, da eine Relativbewegung zwischen Zylindern und Kolben möglich sein muss: Entweder sind daher die Zylinder ortsfest mit dem Gestell verbunden und die Kolben beweglich in den Zylindern gelagert oder die Kolben sind ortsfest mit dem Gestell verbunden und die Zylinder sind beweglich um die Kolben herum gelagert. Eine ortsfeste Anordnung hat den Vorteil, dass der Anschluss von Einlass- und Auslassleitungen erheblich vereinfacht wird. Ein weiterer Vorteil liegt in der verbesserten Abdichtbarkeit, die insbesondere bei hohen Drücken und/oder großen Fördermengen wichtig ist. Um eine ortsfeste Anordnung zu erreichen, müssen die Zylinder bzw. kolben nicht insgesamt starr befestigt sein. Vielmehr reicht es aus, die Zylinder bzw. die Kolben an einem Punkt zu befestigen; dies erlaubt beispielsweise eine schwenkbare Lagerung der Zylinder und Kolben um den Befestigungspunkt bzw. die Befestigungsachse herum. Vorzugsweise ist eine Schwenkbarkeit von bis zu 5° gewährleistet.

Mit anderen Worten kann vorgesehen sein, dass die Zylinder und die Kolben bezogen auf die Mittelachse in Umfangsrichtung weitgehend unbeweglich gelagert sind. Mit anderen Worten sollen sich die Zylinder und die Kolben bei einer Drehung des Steuerelements nicht um die Mittelachse herum mitdrehen sondern in Umfangsrichtung - also in tangentialer Richtung - weitgehend feststehen. Eine Bewegung der Zylinder und der Kolben in anderer Richtung - insbesondere eine Relativbewegung zwischen Zylinder und Kolben in axialer Richtung oder eine Schwenkbewegung - ist hingegen möglich. Diese Gestaltung hat den Vorteil, dass lediglich das Steuerelement (beispielsweise mit einer Antriebswelle) mitgedreht wird.

Die übrigen Bauteile, insbesondere die Zylinder und die Kolben, werden hingegen nicht mitgedreht, sondern allenfalls leicht geschwenkt. Auf diese Weise werden einige der eingangs beschriebenen Nachteile vermieden, beispielsweise Probleme bei der Abdichtung und ein erhöhter Verschleiß infolge einer Relativbewegung zwischen Zylindern und Schrägscheibe. Indem die Zylinder und die Kolben nicht mit dem Steuerelement mitgedreht werden, wird auch der Anschluss von Einlass- und Auslassleitungen an die Zylinder erheblich vereinfacht.

Eine weitere Ausbildung der Kolbenpumpe zeichnet sich dadurch aus, dass das Gestell eine Vorderwand und eine Rückwand zur Lagerung der Zylinder aufweist. Vorzugsweise sind die Vorderwand und die Rückwand eben gestaltet, parallel zueinander angeordnet und beispielsweise durch Distanzstangen miteinander verbunden. Hierdurch kann eine besonders steife Konstruktion erreicht werden, was hohe Förderdrücke ermöglicht. Durch eine doppelwandige Bauweise ist das Gestell besonders steif und - im Vergleicht zu einer massiven Bauweise - gleichwohl leicht. Der Raum zwischen der Vorderwand und der Rückwand kann zur Anordnung bestimmter Bauteile - beispielsweise der Kolben und der Zylinder - genutzt werden, was eine kompakte Bauweise ermöglicht.

In weiterer Ausbildung der Kolbenpumpe ist vorgesehen, dass die Zylinderachsen und die Kolbenachsen koaxial verlaufen. Durch eine koaxiale Anordnung von Zylindern und Kolben wird die Abdichtung erleichtert. Zudem werden bei einer koaxialen Anordnung im Gegensatz zu einer winkligen Anordnung Querkräfte vermieden. Ein weiterer Vorteil liegt darin, dass der Kolben zylindrisch geformt sein kann und somit einfach herstellbar ist.

Im Hinblick auf die Steuerfläche ist in weiterer Ausgestaltung der Kolbenpumpe vorgesehen, dass die Steuerfläche des Steuerelements derart gestaltet ist, dass mehrere Hübe pro Umdrehung ausgeführt werden. Indem mehrere Hübe pro Umdrehung des Steuerelements vorgesehen sind, kann auch bei niedrigen Drehzahlen eine hohe Förderleistung erreicht werden. Auf diese Weise kann oftmals auf ein Getriebe verzichtet werden. Konstruktiv kann dies beispielsweise dadurch erreicht werden, dass die Steuerfläche entlang ihres Umfangs mehrere Vorsprünge ("Berge") oder Rücksprünge ("Täler") aufweist oder insgesamt wellenförmig ausgebildet ist. Ein Wellental (=geringe axiale Ausdehnung des Steuerelementes) hat zur Folge, dass der Kolben weiter aus dem Zylinder herausgeschoben werden kann und ein Wellenberg (=große axiale Ausdehnung des Steuerelementes) hat zur Folge, dass der Kolben weiter in den Zylinder eingeschoben werden kann. Vorzugsweise ist die Steuerfläche des Steuerelements derart gestaltet, dass wenigstens vier, insbesondere wenigstens sechs, insbesondere wenigstens acht oder auch wenigstens zehn Hübe pro Umdrehung, also pro 360°-Bewegung des Steuerelements ausgeführt werden. Besonders gute Ergebnisse werden mit Steuerelementen erzielt, deren Steuerfläche derart gestaltet ist, dass zwischen 10 und 30 Hübe, insbesondere zwischen 15 und 25 Hübe, beispielsweise 18, 20 oder 22 Hübe pro Umdrehung ausgeführt werden. Bevorzugt ist die Anzahl der Zyklen einer Steuerfläche in Umfangsrichtung ungleich der Anzahl der durch diese Steuerfläche angesteuerten Kolben. Dies hat zur Folge, dass die Kolben nicht gleichzeitig, sondern nacheinander in die Zylinder eingeschoben werden, was einen gleichmäßigeren Druckverlauf zur Folge hat. Die Steuerflächen können beispielsweise wellenförmig gestaltet sein, wobei

Nach einer weiteren Ausgestaltung der Kolbenpumpe ist vorgesehen, dass die Kolben eine Feder zum Herausfahren der Kolben aus den Zylindern aufweisen. Die Federn dienen dazu, Rückstellkräfte zu erzeugen, wenn der Kolben in den Zylinder eingeschoben wird. Dies hat den Vorteil, dass die Kolben nicht aktiv aus dem Zylinder herausgezogen werden müssen, sondern automatisch wieder aus dem Zylinder herausgedrückt werden, sobald das Steuerelement den hierfür notwendigen Raum freigibt. Der Einsatz von Federn hat zudem den Vorteil, dass die Kolben durch Bauteile angesteuert werden können, die ausschließlich Druckkräfte, aber keine Zugkräfte übertragen können, beispielsweise Rollen, die auf den Steuerflächen des Steuerelementes abrollen. Bei den Federn kann es sich beispielsweise um Schraubenfedern handeln, die die Kolben bzw. Kolbenstangen umschließen.

Erfindungsgemäß ist es vorgesehen, dass der Kontaktbereich zwischen den Rollen und der Steuerfläche des Steuerelements schmiermittelfrei ist. Da die Rollen auf der Steuerfläche abrollen, wird im Gegensatz zu abgleitenden Lösungen auf den Einsatz von Schmiermittel im Kontaktbereich verzichtet. Das Abrollen der Rollen auf der Steuerfläche erfolgt also "trocken". Dies vereinfacht den Aufbau der Kolbenpumpe erheblich, da kein abzudichtender (Öl-)Raum um den Kontaktbereich herum gebildet ist. Es kann jedoch gleichwohl vorgesehen sein, dass die Drehbarkeit der Rollen selbst durch die Verwendung von Schmiermittel gewährleistet oder verbessert wird, beispielsweise durch geschmierte Wälzlager. Vorzugsweise bildet sich zwischen den Rollen und der Steuerfläche des Steuerelements ein Linienkontakt, beispielsweise durch den Einsatz von zylindrischen Rollen.

Gemäß einer weiteren Ausgestaltung der Kolbenpumpe ist vorgesehen, dass die Zylinderachsen und die Kolbenachsen parallel zur Mittelachse verlaufen. Ein derartiger Aufbau wird oft als "Axialkolbenpumpe" bezeichnet. Durch die parallele Anordnung kann erreicht werden, dass die Ausdehnung der Kolbenpumpe in radialer Richtung besonders kompakt ist, da sich die Zylinder und die Kolben ausschließlich in axialer Richtung erstrecken. Ein weiterer Vorteil der axialen Ausrichtung liegt darin, dass die Kolben - anders als bei einer schrägen Anordnung - in jeder Kolbenstellung denselben radialen Abstand zur Mittelachse aufweisen und somit besonders gut durch das Steuerelement angesteuert werden können.

Eine weitere Ausbildung der Kolbenpumpe zeichnet sich aus durch eine erste Gruppe aus wenigstens einem, vorzugsweise aus wenigstens zwei Zylindern mit jeweils einem darin bewegbaren Kolben, und eine zweite Gruppe aus wenigstens einem, vorzugsweise aus wenigstens zwei Zylindern mit jeweils einem darin bewegbaren Kolben. Durch mehrere Gruppen von Zylindern und Kolben kann die Förderleistung erhöht werden. Zudem können Druckschwankungen verringert werden. Vorzugsweise sind alle Zylinder einer Gruppe auf derselben Seite des Steuerelements angeordnet.

Zu dieser Ausbildung wird weiter vorgeschlagen, dass die erste Gruppe aus Zylindern mit deren Kolben und die zweite Gruppe aus Zylindern mit deren Kolben in axialer Richtung auf unterschiedlichen Seiten des Steuerelementes angeordnet sind. Das Steuerelement soll also zwischen beiden Gruppen von Zylindern und Kolben angeordnet sein und beide Gruppen steuern. Diese Anordnung hat mehrere Vorteile: Erstens wird eine besonders kompakte Bauweise erreicht, da ein Steuerelement zur Steuerung beider Gruppen von Zylindern und Kolben genutzt werden kann. Zweitens kann bei entsprechender Anordnung und Ansteuerung der Zylinder und Kolben als Hauptvorteil ein Axialkraftausgleich erreicht werden, indem sich entgegengerichtete Kräfte ausgleichen, was zu einem ruhigeren, schwingungsärmeren Lauf führt (entspricht dem Prinzip eines Boxermotors im Fahrzeugbau).

Eine weitere Ausgestaltung der Kolbenpumpe sieht vor, dass die Steuerflächen des Steuerelementes in axiale Richtung gerichtet sind und ihr axialer Abstand zu den Zylindern durch eine Drehung der Antriebswelle veränderbar ist. Diese Ausrichtung der Steuerflächen hat den Vorteil, dass axial ausgerichtete Kolben besonders gut angesteuert werden können, beispielsweise indem an den Kolben montierte Rollen auf den Steuerflächen abrollen oder andere geeignete Bauteile auf den Steuerflächen abgleiten. Eine Veränderung des axialen Abstands hat zur Folge, dass das durch das Steuerelement angesteuerte Bauteil - beispielsweise der Kolben - seine axiale Lage verändert. Dies führt zu einer Variation des Zylindervolumens und somit zu einer Pumpwirkung. Vorzugsweise erfolgt die Veränderung des axialen Abstands zyklisch, also wiederholend. Bevorzugt wiederholt sich der Zyklus in Umfangsrichtung mehrfach pro Umlauf. Es werden also mehrere Hübe pro Umdrehung ausgeführt.

Gemäß einer weiteren Ausgestaltung der Kolbenpumpe ist vorgesehen, dass die Zylinderachsen und die Kolbenachsen radial zur Mittelachse verlaufen. Ein derartiger Aufbau wird oft als "Radialkolbenpumpe" bezeichnet. Durch die radiale - also von der Mittelachse nach außen gerichtete - Anordnung kann erreicht werden, dass die Ausdehnung der Kolbenpumpe in axialer Richtung besonders kompakt ist, da sich die Zylinder und die Kolben ausschließlich in radialer Richtung erstrecken. Ein weiterer Vorteil der radialen Ausrichtung liegt darin, dass die mehrere Reihen von radial angeordneten Zylindern und Kolben in axialer Richtung aneinandergereiht werden können (modulare Bauweise).

In weiterer Ausbildung der Kolbenpumpe ist vorgesehen, dass das Steuerelement in radialer Richtung außerhalb der Zylinder und der Kolben angeordnet ist und diese ringförmig umgibt. Das Steuerelement soll also als großer Ring ausgestaltet sein, in dessen Mitte die Kolben und Zylinder angeordnet sind. Dies hat den Vorteil einer in axialer Richtung besonders kompakten Bauweise. Zudem erlaubt die ringförmige Gestaltung des Steuerelements bei nach innen gerichteter Steuerfläche einen radialen Kräfteausgleich, wenn zwei gegenüberliegenden Kolben von dem Steuerelement gleichzeitig nach innen - also in Richtung der Mittelachse - gedrückt werden. Die Anordnung der Zylinder und Kolben innerhalb des Steuerelements hat zudem den Vorteil, dass das Steuerelement von außen gut zugänglich ist. Dies erlaubt die Einleitung der Antriebsleistung von außen in das Steuerelement - beispielsweise durch den Rotor einer Windkraftanlage.

Nach einer weiteren Ausgestaltung der Kolbenpumpe ist vorgesehen, dass die Steuerfläche des Steuerelementes in radialer Richtung zur Mittelachse gerichtet ist und ihr axialer Abstand zu den Zylindern durch eine Drehung des Steuerelements um die Mittelachse veränderbar ist. Eine radial nach innen gerichtete Steuerfläche erlaubt einen radialen Kräfteausgleich, wenn zwei gegenüberliegenden Kolben von dem Steuerelement gleichzeitig nach innen - also in Richtung der Mittelachse - gedrückt werden. Zudem ermöglicht eine derartige Steuerfläche die Anordnung der Zylinder und der Kolben innerhalb des Steuerelements, was eine in axialer Richtung sehr kompakte Bauweise zur Folge hat.

Eine weitere Ausbildung der Kolbenpumpe zeichnet sich aus durch Längslenker zur Führung der Rollen, wobei vorzugsweise jeder Rolle ein Längslenker zugeordnet ist. Beim Abrollen der Rollen auf der Steuerfläche des Steuerelements kann es zur Einleitung von Querkräften in das "Pumpenelement" (Einheit aus Kolben und Zylinder) kommen. Dies liegt daran, dass die Steuerfläche auch schräg zur Kolbenachse verlaufende Kräfte in den Kolben einleitet - beispielsweise wenn die Rolle "bergauf" rollt. Diese Querkräfte sollen durch die Längslenker aufgefangen und abgestützt werden. Hierzu sind die Längslenker vorzugsweise an einem Ende (drehbar) mit den Rollen verbunden und an dem anderen Ende (ebenfalls drehbar) ortsfest an der Kolbenpumpe befestigt (z.B. an dem Gestell der Kolbenpumpe). Bei konstanter Länge des Längslenkers führt diese Art der Lagerung zu einer leichten Schwenkbewegung des "Pumpenelements", was durch eine entsprechende schwenkbare Lagerung des Zylinders problemlos möglich ist.

Zu dieser Ausbildung wird weiter vorgeschlagen, dass die Längslenker drehbar an einem ortfesten Stützring gelagert sind. Der Stützring kann beispielsweise an dem Gestell der Kolbenpumpe befestigt sein. Er kann ringförmig gestaltet sein und in axialer Richtung neben dem Steuerelement angeordnet sein. Auf diese Weise entsteht eine besonders kurze Distanz zwischen dem Stützring und dem Steuerelement, so dass die Längslenker recht kurz und somit leicht ausgeführt werden können.

Die zuvor beschriebene Kolbenpumpe eignet sich in allen dargestellten Ausgestaltungen besonders gut für die Verwendung in einer Windkraftanlage. Die Kolbenpumpe kann sowohl in einer Windkraftanlage mit horizontaler Drehachse als auch in einer Windkraftanlage mit vertikaler Drehachse eingesetzt werden. Vorzugsweise weist die Windkraftanlage einen Rotor und eine Turbine auf, wobei der Rotor mechanisch mit der Kolbenpumpe verbunden ist und wobei die Kolbenpumpe und die Turbine durch Fluidleitungen miteinander verbunden sind. Windkraftanlagen mit horizontaler Drehachse weisen oftmals zusätzlich einen Turm mit einer Gondel zur Lagerung des Rotors auf, wodurch ein ausreichender Abstand der Rotorblätter zum Boden gewährleistet wird. Bei Windkraftanlagen mit vertikaler Drehachse kann hingegen auf einen Turm und eine Gondel verzichtet werden, da die Rotation hier in einer parallel zum Boden liegenden Ebene erfolgt.

Nach einer Ausgestaltung der Verwendung ist vorgesehen, dass die Windkraftanlage einen Turm mit einer Gondel und einem Rotor, eine Kolbenpumpe und eine Turbine aufweist, wobei der Rotor mit der Kolbenpumpe mechanisch verbunden ist und wobei die Kolbenpumpe und die Turbine durch Fluidleitungen miteinander verbunden sind. Hierbei handelt es sich um eine besonders weit verbreitete Anlagenform. Anstelle von einer Turbine kann auch - allgemeiner - ein hydraulischer Verbraucher eingesetzt werden. Vorzugsweise ist der Rotor ohne zwischengeschaltetes Getriebe - also ohne Übersetzung - mit der Kolbenpumpe verbunden, so dass die Rotordrehzahl stets der Pumpendrehzahl entspricht.

Bei klassischen Windkraftanlagen ist der Rotor über ein Getriebe mit einem elektrischen Generator verbunden, so dass die Umwandlung von mechanischer Energie in elektrische Energie innerhalb der "Gondel" und somit in großer räumlicher Nähe zu dem Rotor erfolgt. Diese Vorgehensweise hat mehrere Nachteile. Ein Nachteil liegt darin, dass Schwankungen der Windstärke (z.B. Windböen) zu Schwankungen des Drehmomentes führen, was zu Beschädigungen des Getriebes führen kann. Ein weiterer Nachteil liegt darin, dass die Getriebe insbesondere bei Offshore-Anlagen aufgrund der salzhaltigen Luft verstärkter Korrosion ausgesetzt sind. Auch die Anordnung des elektrischen Generators und der erforderlichen Leistungselektronik in der Gondel kann sich als problematisch erweisen, da die vor allem bei Offshore-Anlagen erschwerte Zugänglichkeit zu sehr hohen Wartungskosten führt.

Um diese Nachteile zu vermeiden, sind vereinzelte Ansätze bekannt, die den Einsatz fluidtechnischer Maschinen (insb. Pumpen und Turbinen) vorsehen. Eine derartige Lösung ist beispielsweise aus der WO 2012/073280 A1 bekannt. Gemäß dieser Lösung wird der Rotor mit einer hydraulischen Radialkolbenpumpe verbunden, die mit einem hydraulischen Motor verbunden ist. Der hydraulische Motor ist wiederum mit einem elektrischen Generator verbunden. Die Idee liegt also darin, ein mechanisches Getriebe durch ein hydraulisches Getriebe (bestehend aus der hydraulischen Radialkolbenpumpe und dem hydraulischen Motor) zu ersetzen. Diese Lösung beseitigt zwar die mit einem mechanischen Getriebe verbundenen Nachteile, sieht jedoch nach wie vor eine Anordnung des elektrischen Generators in der Gondel vor, was die zuvor beschriebenen Nachteile hat. Ein weiterer Nachteil liegt wie bereits eingangs beschrieben darin, dass es sich um eine fluidgeschmierte Pumpe handelt, was den Aufbau und die Abdichtung sehr kompliziert macht. Zudem erhöht das Öl den Drehwiderstand, was den Wirkungsgrad verringert. Schließlich hätte auslaufendes Öl bei einem Einsatz in einer Windkraftanlage schwere Umweltschäden zur Folge. Die in der WO 2012/073280 A1 beschriebene Lösung konnte sich aufgrund der beschriebenen Nachteile bisher in der Praxis nicht durchsetzen.

Zur Vermeidung dieser Nachteile wird erfindungsgemäß vorgeschlagen, dass eine Kolbenpumpe nach einem der Ansprüche 1 bis 16 verwendet wird. Der Einsatz einer Axialkolbenpumpe hat den Vorteil, dass der Bauraum der Gondel der Windkraftanlage besonders gut ausgenutzt werden kann. Aus strömungstechnischen Gründen sind insbesondere die Höhe und die Breite der Gondel begrenzt. Diese Anforderung kann durch eine Axialkolbenpumpe erfüllt werden, da sich Axialkolbenpumpen durch eine in radialer Richtung besonders kompakte Bauweise auszeichnen. Der Einsatz einer Radialkolbenpumpe hat hingegen den Vorteil einer in axialer Richtung besonders schmalen Bauweise. Dies hat den Vorteil, dass eine Radialkolbenpumpe an dem Rotor befestigt werden kann und gemeinsam mit dem Rotor an der Gondel einer Windkraftanlage montiert werden kann. Zudem können mehrere Radialkolbenpumpen in axialer Richtung aneinandergereiht werden, um die Förderleistung zu erhöhen.

Die Ausnutzung des Bauraumes der Gondel ist auch deshalb bedeutsam, da die Rotoren von Windkraftanlagen üblicherweise nur mit sehr geringer Drehzahl betrieben werden (beispielsweise 10 U/min bis 30 U/min) und möglichst kein mechanisches Getriebe zur Übersetzung eingesetzt werden soll. Die Pumpe muss daher in der Lage sein, aus geringen Drehzahlen eine hohe Fördermenge zu generieren. Die hierzu erforderlichen konstruktiven Maßnahmen erfordern eine große räumliche Ausdehnung der Pumpe.

Nach einer Ausgestaltung der Verwendung ist vorgesehen, dass die Kolbenpumpe in der Gondel angeordnet ist und dass die Turbine außerhalb der Gondel und außerhalb des Turmes angeordnet ist. Diese Ausgestaltung hat das Ziel, die in der Turbine stattfindende Energieumwandlung aus der Gondel heraus zu verlagern. Dies hat zur Folge, dass vorzugsweise auch der von der Turbine angetriebene elektrische Generator außerhalb der Gondel angeordnet werden kann. Hierzu müssen Fluidleitungen aus der Gondel und aus dem Turm herausgeführt werden, um die Axialkolbenpumpe mit der Turbine zu verbinden. Die Anordnung der Turbine und des Generators außerhalb der Gondel hat beispielsweise den Vorteil, dass kaum Beschränkungen hinsichtlich des Bauraumes bestehen. Daher können größere Turbinen und Generatoren eingesetzt werden, an die mehrere Pumpen aus unterschiedlichen Gondeln angeschlossen sind. Ein weiterer Vorteil liegt darin, wartungsintensive Teile entweder ganz entfallen (mechanisches Getriebe) oder aus der Gondel heraus zu leichter zugänglichen Orten verlagert werden (Turbine).

Gemäß einer weiteren Ausbildung der Verwendung ist vorgesehen, dass die Windkraftanlage einen elektrischen Generator und einen elektrischen Wandler aufweist, die außerhalb der Gondel und außerhalb des Turmes angeordnet sind. Diese Ausbildung hat das Ziel, dass die Umwandlung von mechanischer Energie in elektrische Energie aus der Gondel heraus zu verlagern. Auch dies hat die bereits beschriebenen Vorteile, insbesondere keine Bauraumbeschränkungen und bessere Zugänglichkeit zu Wartungszwecken.

In weiterer Ausgestaltung der Verwendung ist vorgesehen, dass als Pumpmedium Wasser, insbesondere Meerwasser verwendet wird. Die Verwendung von Wasser als Pumpmedium hat insbesondere ökologische Vorteile, da Wasser als Pumpmedium einfach nachgefüllt oder in die Umgebung abgelassen werden kann. Dies stellt einen großen Unterschied zu Öl als Pumpmedium dar, das bereits bei geringen Leckagemengen große Umweltschäden verursachen kann. Insbesondere bei Offshore-Windkraftanlagen hat die Verwendung von Wasser als Pumpmedium große Vorteile, da dieses Medium in praktisch unbegrenzter Menge vor Ort vorhanden ist und daher - beispielsweise bei Wartungsarbeiten - leicht abgelassen und anschließend wieder nachgefüllt werden kann. Die zuvor beschriebene Axialkolbenpumpe eignet sich besonders gut für die Verwendung von Wasser als Pumpmedium, da diese Pumpe nicht durch das Fördermedium geschmiert werden muss.

Gemäß einer weiteren Ausbildung der Verwendung ist schließlich vorgesehen, dass die Windkraftanlage eine Versorgungspumpe aufweist. Insbesondere kann vorgesehen sein, dass die Versorgungspumpe außerhalb der Gondel und außerhalb des Turmes angeordnet ist und in den Fluidkreislauf der Kolbenpumpe und der Turbine integriert ist. Die zusätzliche Versorgungspumpe dient dem Zweck, dass Pumpmedium - beispielsweise Wasser - zu der Kolbenpumpe zu fördern. Aufgrund der großen Höhendifferenz kann eine zusätzliche Versorgungspumpe nützlich sein, da die Kolbenpumpe das Pumpmedium nur bis zu einer begrenzten Höhe ansaugen kann. Bei der Kolbenpumpe kann es sich auch hier beispielsweise um eine Axialkolbenpumpe oder um eine Radialkolbenpumpe handeln.

Die Erfindung wird nachfolgend anhand einer lediglich ein bevorzugtes Ausführungsbeispiel darstellenden Zeichnung näher erläutert. In der Zeichnung zeigen:
- Fig. 1:: eine erfindungsgemäße Axialkolbenpumpe in perspektivischer Ansicht,
- Fig. 2:: die Axialkolbenpumpe aus Fig. 1 in einer Rückansicht,
- Fig. 3:: die Axialkolbenpumpe aus Fig. 1 in einer Seitenansicht,
- Fig. 4:: die Axialkolbenpumpe aus Fig. 1 in einer Draufsicht,
- Fig. 5:: die Axialkolbenpumpe aus Fig. 1 in einer geschnittenen Ansicht entlang der in Fig. 4 eingezeichneten Schnittebene V-V,
- Fig. 6:: die Verwendung der Axialkolbenpumpe aus Fig. 1 in einer Offshore-Windkraftanlage in einer schematischen Darstellung,
- Fig. 7A:: eine erfindungsgemäße Radialkolbenpumpe in perspektivischer Ansicht von der Vorderseite,
- Fig. 7B:: die Radialkolbenpumpe aus Fig. 7A in perspektivischer Ansicht von der Rückseite,
- Fig. 8:: die Radialkolbenpumpe aus Fig. 7A in einer Vorderansicht,
- Fig. 9:: die Radialkolbenpumpe aus Fig. 7A in einer Seitenansicht,
- Fig. 10:: die Radialkolbenpumpe aus Fig. 7A in einer Draufsicht, und
- Fig. 11:: die Verwendung der Radialkolbenpumpe aus Fig. 7A in einer Offshore-Windkraftanlage in einer schematischen Darstellung.

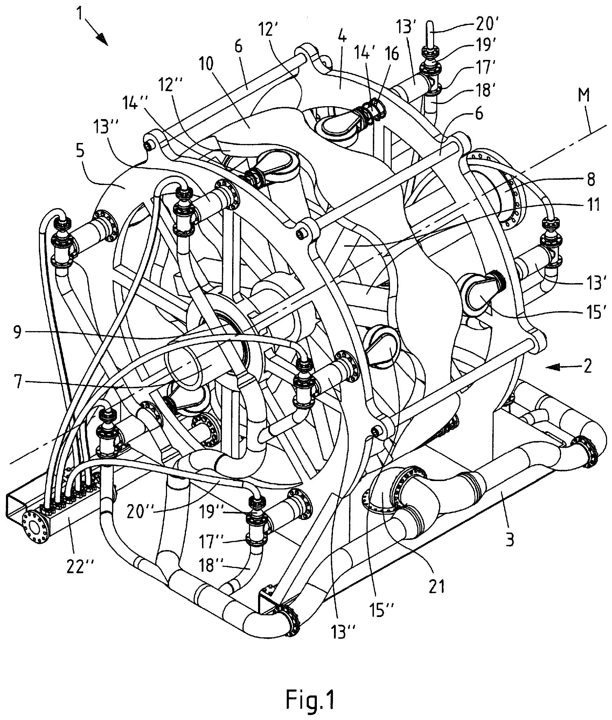

Fig. 1 zeigt eine erfindungsgemäße Axialkolbenpumpe 1 in perspektivischer Ansicht. Die Axialkolbenpumpe 1 weist ein Gestell 2 auf, das zwei Standfüße 3, eine Vorderwand 4 und eine Rückwand 5 umfasst. Die Vorderwand 4 und die Rückwand 5 sind etwa rund und durch mehrere über ihren Umfang verteilte Distanzstangen 6 derart voneinander beabstandet, dass die Vorderwand 4 und die Rückwand 5 in parallelen Ebenen angeordnet sind. In dem Rahmen 2 ist eine Antriebswelle 7 drehbar gelagert, an deren Ende ein Flansch 8 vorgesehen ist. An den Flansch 8 kann beispielsweise eine (in Fig. 1 nicht gezeigte) Rotorwelle einer Windkraftanlage angeschlossen werden. Die Antriebswelle 7 ist auf einer zentral durch die Axialkolbenpumpe 1 verlaufenden Mittelachse M angeordnet. Die Antriebswelle 7 ist durch zwei Lager 9 drehbar in dem Gehäuse 2 gelagert, wobei ein Lager 9 in der Vorderwand 4 angeordnet ist und wobei das andere Lager 9 in der Rückwand 5 angeordnet ist.

Die in Fig. 1 gezeigte Axialkolbenpumpe 1 weist zudem ein ringförmiges Steuerelement 10 auf, das über mehrere Speichen 11 drehfest mit der Antriebswelle 7 verbunden ist. Eine Rotationsbewegung der Antriebswelle 7 führt daher zu einer Rotationsbewegung des Steuerelementes 10. Das Steuerelement 10 weist zwei gegenüberliegende Steuerflächen 12', 12" auf, die jeweils in axiale Richtung gerichtet sind und wellenförmig gestaltet sind. Weiterhin weist die in Fig. 1 gezeigte Axialkolbenpumpe 1 zehn Zylinder 13', 13" und zehn diesen Zylindern zugeordnete Kolben 14', 14" auf.

Die Zylinder 13 und die Kolben 14 der in Fig. 1 gezeigten Axialkolbenpumpe 1 können in zwei Gruppen eingeteilt werden: Die fünf vorderen Zylinder 13' sind an der Vorderwand 4 befestigt, wobei die fünf vorderen Zylinder 13' kreisförmig um die Mittelachse M herum angeordnet und in axialer Richtung - also koaxial zur Mittelachse M - ausgerichtet sind. Die fünf vorderen Kolben 14' sind in axialer Richtung beweglich in den fünf vorderen Zylindern 13' gelagert und somit ebenfalls kreisförmig um die Mittelachse M herum angeordnet und koaxial zu dieser Mittelachse M ausgerichtet. Die fünf hinteren Zylinder 13" sind hingegen an der Rückwand 5 befestigt, wobei die fünf hinteren Zylinder 13" kreisförmig um die Mittelachse M herum angeordnet und in axialer Richtung - also koaxial zur Mittelachse M - ausgerichtet sind. Die fünf hinteren Kolben 14" sind in axialer Richtung beweglich in den fünf hinteren Zylindern 13" gelagert und somit ebenfalls kreisförmig um die Mittelachse M herum angeordnet und koaxial zu dieser Mittelachse M ausgerichtet.

Bei der in Fig. 1 gezeigten Axialkolbenpumpe 1 sind die Kolben 14', 14" - beispielsweise über Kolbenstangen - mit drehbar gelagerten Rollen 15 verbunden. Auch die Rollen 15 können in zwei Gruppen eingeteilt werden: an den vorderen Kolben 14' sind vordere Rollen 15' drehbar gelagert und an den hinteren Kolben 14" sind hintere Rollen 15" drehbar gelagert. Die Rollen 15 sind derart angeordnet, dass sie auf den Steuerflächen 12 des Steuerelementes 10 abrollen, wobei die vorderen Rollen 15' auf der vorderen Steuerfläche 12' abrollen und wobei die hinteren Rollen 15" auf der hinteren Steuerfläche 12" abrollen. Aufgrund der wellenförmigen Gestaltung der Steuerflächen 12 verändert sich die Lage der Steuerflächen 12 in axialer Richtung bei einer Drehung des Steuerelementes 10. Dies führt dazu, dass bei einer erhöhten axialen Breite des Steuerelementes 10 (größerer axialer Abstand zwischen beiden Steuerflächen 12', 12") die beiden Rollen 15', 15" in axialer Richtung nach außen (also in Richtung der Vorderwand 4 und der Rückwand 5) gedrückt werden. Dies hat zur Folge, dass die mit den Rollen 15', 15" verbundenen Kolben 14', 14" in die ihnen zugeordneten Zylinder 13', 13" gepresst werden und hierbei das in den Zylindern 13', 13" befindliche Fluid verdrängen. Andererseits führt eine verringerte axiale Breite des Steuerelementes 10 (geringerer axialer Abstand zwischen beiden Steuerflächen 12', 12") dazu, dass die Rollen 15', 15" in axialer Richtung nach innen (also in Richtung des Steuerelementes 10) bewegt werden können. Hierzu weist die Axialkolbenpumpe 1 zehn Federn 16 auf, die derart angeordnet sind, dass sie die Kolben 14', 14" aus den Zylindern 13', 13" herausdrücken. Beispielsweise ist um jeden Kolben 14', 14" eine Schraubenfeder 16 herumgeführt. Die Federkräfte haben zur Folge, dass die Rollen 15', 15" stets der Kontur der Steuerflächen 12', 12" folgen und die mit den Rollen 15', 15" verbundenen Kolben 14', 14" wieder aus den ihnen zugeordneten Zylindern 13', 13" herausgezogen werden, wobei sich das Zylindervolumen wieder vergrößert. Die Rollen 15', 15" sind also derart gelagert, dass sie auf den Steuerflächen 12', 12" des Steuerelementes 10 abrollen.

Bei der in Fig. 1 gezeigten Axialkolbenpumpe 1 kann also durch eine Drehung der Antriebswelle 7 das Volumen in den Zylindern 13', 13" zyklisch verändert werden. Um die zyklische Veränderung der Zylindervolumina für die Förderung eines Fluids nutzen zu können, weist jeder Zylinder 13', 13" einen Einlass 17', 17" mit einer Einlassleitung 18', 18" und einen Auslass 19', 19" mit einer Auslassleitung 20', 20" auf. Zudem weist jeder Zylinder 13 zwei (in Fig. 1 nicht gezeigte) Rückschlagventile auf. Die Einlassleitungen 18', 18" aller Zylinder 13', 13" werden zu einem gemeinsamen Sauganschluss 21 zusammengeführt. In ähnlicher Weise werden die Auslassleitungen 20' der vorderen Zylinder 13' zu einem gemeinsamen vorderen Druckanschluss 22' zusammengeführt und die Auslassleitungen 20" der hinteren Zylinder 13" werden zu einem gemeinsamen hinteren Druckanschluss 22" zusammengeführt. Beide Druckanschlüsse 22', 22" können zu einem gemeinsamen (in Fig. 1 nicht gezeigten) Druckanschluss zusammengeführt werden.

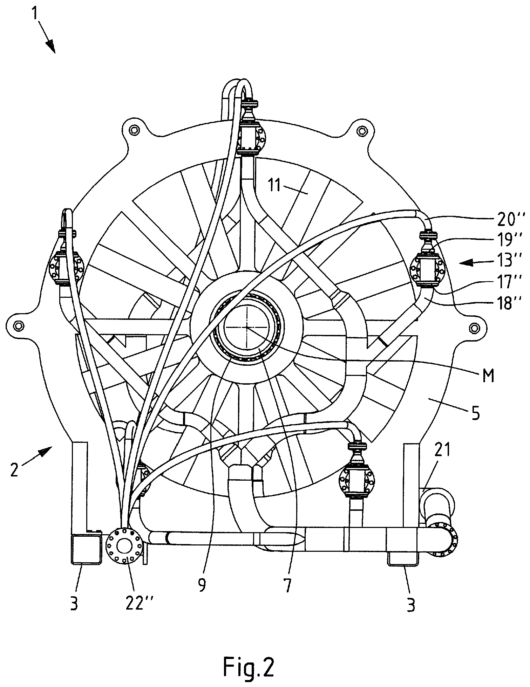

In Fig. 2 ist die Axialkolbenpumpe 1 aus Fig. 1 in einer Rückansicht dargestellt. Diejenigen Bereiche der Axialkolbenpumpe 1, die bereits im Zusammenhang mit Fig. 1 beschrieben wurden, sind in Fig. 2 - und in allen weiteren Figuren - mit entsprechenden Bezugszeichen versehen. Die Rückansicht erlaubt einen Blick auf die Rückwand 5 der Axialkolbenpumpe 1 und auf die Einlassleitungen 18" und die Auslassleitungen 20" der an der Rückwand 5 befestigten hinteren Zylinder 13". Deutlich erkennbar sind auch die Mittelachse M und die sich entlang dieser Mittelachse M erstreckende Antriebswelle 7. Zudem sind im unteren Bereich der Sauganschluss 21 und der hintere Druckanschluss 22" erkennbar.

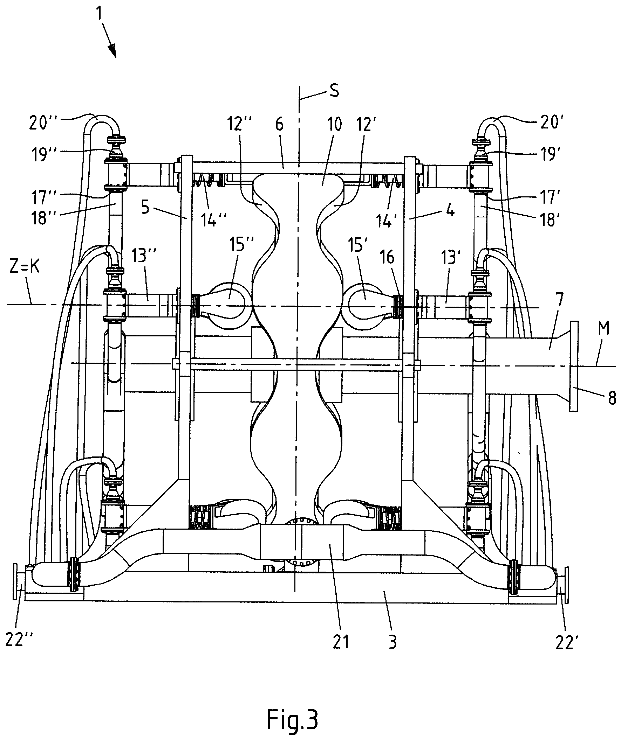

Fig. 3 zeigt die Axialkolbenpumpe aus Fig. 1 in einer Seitenansicht. Auch in Fig. 3 sind diejenigen Bereiche der Axialkolbenpumpe 1, die bereits im Zusammenhang mit Fig. 1 oder Fig. 2 beschrieben wurden, mit entsprechenden Bezugszeichen versehen. In der Seitenansicht ist die in Bezug auf eine Symmetrieebene S symmetrische Anordnung der Zylinder 13 und der Kolben 14 besonders gut erkennbar: Jeweils ein vorderer Zylinder 13' (mit einem vorderen Kolben 14') und ein hinterer Zylinder 13" (mit einem hinteren Kolben 14") liegen auf einer Zylinderachse Z, die parallel zur Mittelachse M - und somit ebenfalls axial - angeordnet ist. Die Zylinderachse Z fällt zusammen mit einer Kolbenachse K, beide Achsen Z, K sind also kollinear. Es handelt sich daher um eine Axialkolbenpumpe 1, bei der sich die vorderen Kolben 14' und die hinteren Kolben 14" gegenläufig bewegen und spiegelverkehrt stets in der gleichen Position befinden (wie bei einem Hubkolbenmotor in der Bauform eines "Boxermotors").

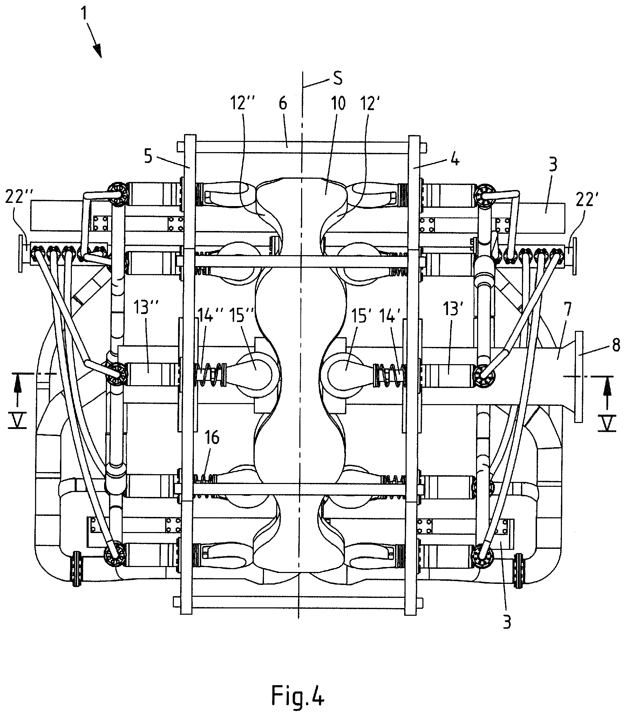

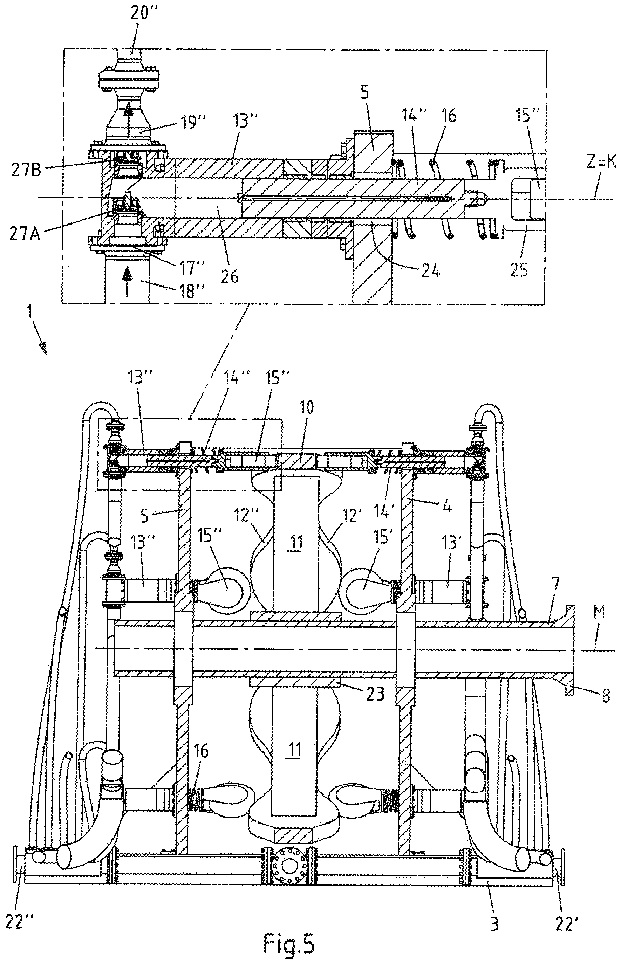

In Fig. 4 ist die Axialkolbenpumpe 1 aus Fig. 1 in einer Draufsicht dargestellt. Auch in Fig. 4 sind diejenigen Bereiche der Axialkolbenpumpe 1, die bereits im Zusammenhang mit Fig. 1 bis Fig. 3 beschrieben wurden, mit entsprechenden Bezugszeichen versehen. Auch in der Draufsicht ist die symmetrische Anordnung vieler Bauteile in Bezug auf die Symmetrieebene S gut erkennbar: Neben den Zylindern 13 und den Kolben 14 sind auch die Vorderwand 4 und die Rückwand 5 in Bezug auf die Symmetrieebene S symmetrisch angeordnet. Der innere Aufbau der Axialkolbenpumpe 1 soll nachfolgend anhand der in Fig. 4 eingezeichneten Schnittebene V-V im Zusammenhang mit Fig. 5 näher erläutert werden.

Fig. 5 zeigt die Axialkolbenpumpe 1 aus Fig. 1 in einer geschnittenen Ansicht entlang der in Fig. 4 eingezeichneten Schnittebene V-V. Auch in Fig. 5 sind diejenigen Bereiche der Axialkolbenpumpe 1, die bereits im Zusammenhang mit Fig. 1 bis Fig. 4 beschrieben wurden, mit entsprechenden Bezugszeichen versehen. In der geschnittenen Ansicht ist deutlich erkennbar, dass die Antriebswelle 7 als Hohlwelle ausgeführt ist. Zudem ist die Gestaltung der drehfesten Verbindung zwischen dem Steuerelement 10, seinen Speichen 11 und der Antriebswelle 7 erkennbar: Die Speichen 11 des Steuerelementes 10 sind an ihren radial inneren Enden mit einer Nabe 23 verbunden, die drehfest - beispielsweise über eine Pressverbindung - mit der Antriebswelle 7 verbunden ist.

In Fig. 5 ist zudem ein vergrößerter Bereich eines hinteren Zylinders 13" dargestellt. In der vergrößerten Ansicht ist erkennbar, dass der Zylinder 13" mit der Rückwand 5 verbunden ist. Der in den Zylinder 13" ein- und ausschiebbare Kolben 14" wird durch eine in der Rückwand 5 vorgesehene Öffnung 24 hindurchgeführt. An seinem freien Ende ist der Kolben 14" mit der Rolle 15" verbunden, die über eine Gabel 25 beidseitig gelagert ist. Die Feder 16 ist als Schraubenfeder ausgeführt, die um den Kolben 14" herumgeführt ist. Außen stützt sich die Feder 16 an der Innenseite der Rückwand 5 ab und innen stützt sich die Feder 16 an der Außenseite der Gabel 25 ab. Der Zylinder 13" weist einen zylindrischen Innenraum 26 auf, dessen Volumen sich je nach Stellung des Kolbens 14" verändert. Der Zylinder 13" weist einen Einlass 17" und einen Auslass 19" auf, wobei an den Einlass 17" eine Einlassleitung 18" angeschlossen ist und wobei an den Auslass 19" eine Auslassleitung 20" angeschlossen ist. Um eine Durchströmung des Zylinders 13" in Richtung der eingezeichneten Pfeile zu erreichen, weist der Zylinder 13" zwei Ventile 27A, 27B auf, die beispielsweise als Tellerrückschlagventile mit Feder ausgeführt sein können. Das erste Ventil 27A ist am Einlass 17" des Zylinders 13" angeordnet, das zweite Ventil 27B ist am Auslass 19" des Zylinders 13" angeordnet. Bei einer Bewegung des Kolbens 14" heraus aus dem Zylinder 13" (nach rechts in Fig. 5) ist das erste Ventil 27A geöffnet, so dass Fluid durch die Einlassleitung 18" und den Einlass 17" in den Innenraum 26 des Zylinders 13" einströmen kann, während das zweite Ventil 27B geschlossen ist, so dass keine Rückströmung aus der Auslassleitung 20" erfolgen kann. Dieser Schritt wird auch als "Ansaugen" bezeichnet. Bei einer Bewegung des Kolbens 14" hinein in den Zylinder 13" (nach links in Fig. 5) sind die Stellungen der Ventile 27A, 27B hingegen umgekehrt: das erste Ventil 27A ist geschlossen, damit keine Rückströmung in die Einlassleitung 18" entstehen kann und das zweite Ventil 27B ist geöffnet, damit das Fluid von dem Kolben 14" durch den Auslass 19" und die Auslassleitung 20" aus dem Innenraum 26 des Zylinders 13" herausgedrückt werden kann. Dieser Schritt wird auch als "Verdrängen" bezeichnet.

Der zuvor beschriebene Aufbau und die zuvor näher erläuterte Funktionsweise betrifft nicht nur den in Fig. 5 gezeigten hinteren Zylinder 13" sondern alle fünf hinteren Zylinder 13" und - in entsprechender Weise - alle fünf vorderen Zylinder 13' der Axialkolbenpumpe 1.

Die zuvor dargestellte Axialkolbenpumpe 1 ist derart projektiert, dass sie bei einer Leistung von etwa 3300 kW, einem Druck von etwa 200 bar und einer Drehzahl von etwa 10 U/min eine Förderleistung von etwa 8900 l/min aufweist.

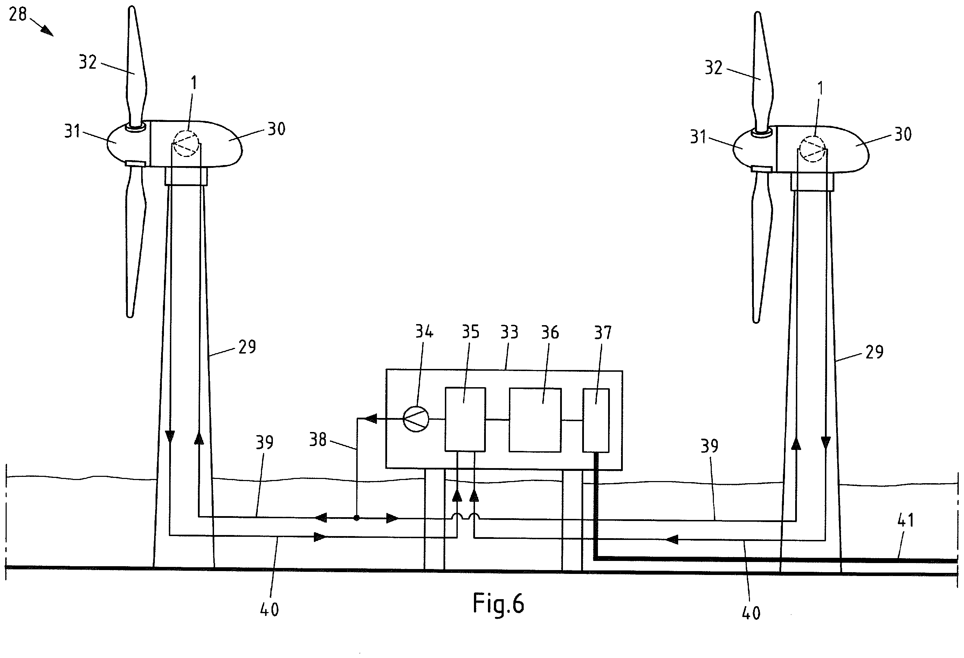

Fig. 6 zeigt die Verwendung der Axialkolbenpumpe 1 aus Fig. 1 in einer Offshore-Windkraftanlage in einer schematischen Darstellung. Die in Fig. 6 gezeigte Windkraftanlage 28 umfasst zwei auf dem Boden eines Gewässers stehende Türme 29, auf denen jeweils eine Gondel 30 befestigt ist. An jeder Gondel 30 ist ein drehbarer Rotor 31 mit jeweils drei Rotorblättern 32 vorgesehen. In beiden Gondeln 30 ist eine Pumpe angeordnet, bei der es sich um die zuvor beschriebene Axialkolbenpumpe 1 handeln kann. Die Windkraftanlage 28 umfasst zudem eine ebenfalls auf dem Boden eines Gewässers stehende Plattform 33, auf der eine Versorgungspumpe 34, eine Turbine 35, ein elektrischer Generator 36 und ein elektrischer Wandler 37 angeordnet sind.

Die in Fig. 6 gezeigte Windkraftanlage 28 weist zwei Flüssigkeitskreisläufe auf, wobei es sich bei der Flüssigkeit vorzugsweise um Wasser, insbesondere um Meerwasser bzw. Salzwasser handelt. Ausgehend von der Versorgungspumpe 34 wird das Wasser durch eine Versorgungsleitung 38 gepumpt, die sich in zwei Niederdruckleitungen 39 aufteilt. Die Niederdruckleitungen 39 leiten das Wasser zu den beiden Türmen 29 und zu den beiden in den Gondeln 30 angeordneten Axialkolbenpumpen 1. Dort sind die Niederdruckleitungen 39 an die bereits zuvor beschriebenen Sauganschlüsse 21 der Axialkolbenpumpen 1 angeschlossen. Die Rotoren 31 sind über die Flansche 8 unmittelbar mit den Antriebswellen 7 der Axialkolbenpumpen 1 verbunden, so dass eine Rotation der Rotoren 31 zu einer Rotation der Antriebswellen 7 führt. Erforderlichenfalls können zwischen den Rotoren 31 und den Antriebswellen 7 Getriebe vorgesehen sein; vorzugsweise sind die Rotoren 31 jedoch direkt mit den Antriebswellen 7 der Axialkolbenpumpen 1 verbunden, so dass keine Wandlung der Drehzahlen und Drehmomente erfolgt. In den Axialkolbenpumpen 1 erfolgt eine deutliche Erhöhung des Druckes des Wassers, das die Axialkolbenpumpen 1 durch die Druckanschlüsse 22', 22" verlässt und von dort durch Hochdruckleitungen 40 zu der auf der Plattform 33 angeordneten Turbine 35 gepumpt. Das Wasser durchströmt die Turbine 35, wobei sich der Wasserdruck verringert, und strömt anschließend zurück zu der Versorgungspumpe 34, so dass es sich um einen geschlossenen Kreislauf handelt.

Die Druckdifferenz zwischen dem Eingang und dem Ausgang der Turbine 35 führt zu einer Umwandlung von potentieller und kinetischer Energie des Wassers in Rotationsenergie, was zu einer Drehung der Turbinenwelle führt. Die Turbinenwelle überträgt die Rotationsenergie auf den elektrischen Generator 36, der eine elektrische Wechselspannung erzeugt. Die Erzeugung von elektrischer Energie ist also bei der gezeigten Windkraftanlage 28 aus der Gondel 30 heraus in die Plattform 33 verlagert worden. Zwischen der Turbine 35 und dem elektrischen Generator 36 können weitere Komponenten wie beispielsweise Bremsen, Kupplungen und Getriebe vorgesehen sein. Die Wechselspannung kann anschließend in dem elektrischen Wandler 37 umgewandelt werden. Bei dem elektrischen Wandler kann es sich beispielsweise um einen Umrichter (Änderung von Frequenz und Amplitude der Wechselspannung) oder um einen Gleichrichter (Umwandlung von Wechselspannung in Gleichspannung) handeln. Der Ausgang des elektrischen Wandlers 37 ist mit einer Hochspannungsleitung 41 verbunden, durch den die erzeugte elektrische Energie in das Netz eingespeist werden kann.

Die in Fig. 6 gezeigte Windkraftanlage 28 weist aus Gründen der einfacheren Darstellbarkeit eine Plattform 33 auf, an die zwei Türme 29 angeschlossen sind. Alternativ wäre es auch möglich, eine größere Anzahl an Türmen 29 an die Plattform 33 anzuschließen, beispielsweise Teile eines "Offshore-Windparks".

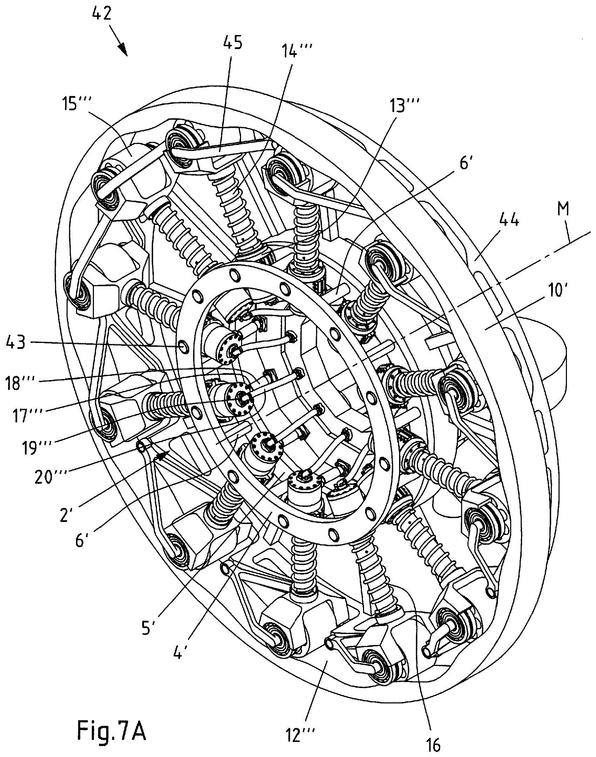

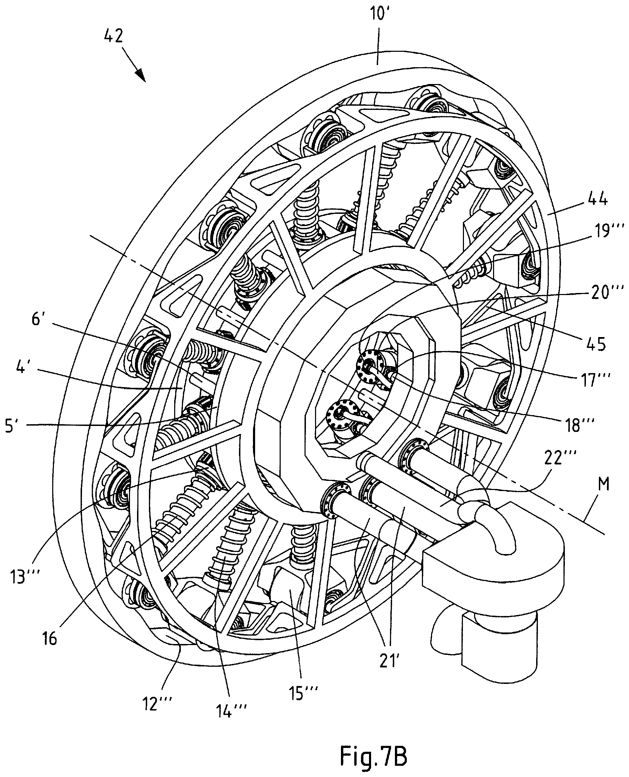

Fig. 7A zeigt eine erfindungsgemäße Radialkolbenpumpe 42 in perspektivischer Ansicht von der Vorderseite, Fig. 7B zeigt dieselbe Radialkolbenpumpe 42 in perspektivischer Ansicht von der Rückseite. Die Radialkolbenpumpe 42 weist ein Gestell 2' auf, das ringförmig gestaltet ist und eine Vorderwand 4' und eine Rückwand 5' umfasst. Die Vorderwand 4' und die Rückwand 5' sind etwa rund und durch mehrere über ihren Umfang verteilte Distanzstangen 6' derart voneinander beabstandet, dass die Vorderwand 4' und die Rückwand 5' in parallelen Ebenen angeordnet sind.

Die in Fig. 7A und in Fig. 7B gezeigte Radialkolbenpumpe 42 weist zudem ein ringförmiges Steuerelement 10' auf, das beispielsweise mit einer (in Fig. 7A und Fig. 7B nicht gezeigten) Rotorwelle einer Windkraftanlage verbunden werden kann und somit von der Rotorwelle angetrieben werden kann. Eine Rotationsbewegung der Rotorwelle führt daher zu einer Rotationsbewegung des Steuerelementes 10'. Das Steuerelement 10' weist eine radial nach innen gerichtete Steuerfläche 12"' auf, die wellenförmig gestaltet ist. Weiterhin weist die in Fig.7A und Fig. 7B gezeigte Radialkolbenpumpe 42 zwölf Zylinder 13"' und zehn diesen Zylindern zugeordnete Kolben 14"' auf.

Die Zylinder 13"' und die Kolben 14"' der in Fig. 7A und in Fig. 7B gezeigten Radialkolbenpumpe 42 schwenkbar an dem Gestell 2' gelagert, wozu in den Vorderwand 4' und in der Rückwand 5' Lagerungen 43 vorgesehen sind. Durch die schwenkbare Lagerung können die Zylinder 13"' und die Kolben 14"' um die Lagerung 43 herum rotieren, was aber im Betrieb nur in sehr geringem Umfang erfolgt (weniger als 5°). Die Zylinder 13'" und die Kolben 14"' sind kreisförmig um eine Mittelachse M herum angeordnet und in radialer Richtung - also radial zur Mittelachse M - ausgerichtet.

Bei der in Fig. 7A und Fig. 7B gezeigten Radialkolbenpumpe 42 sind die Kolben 14"' - beispielsweise über Kolbenstangen - mit drehbar gelagerten Rollen 15"' verbunden. Die Rollen 15"' sind derart angeordnet, dass sie auf der radial nach innen gerichteten Steuerfläche 12"' des Steuerelementes 10' abrollen. Aufgrund der wellenförmigen Gestaltung der Steuerfläche 12"' verändert sich die Lage der Steuerfläche 12"' in radialer Richtung bei einer Drehung des Steuerelementes 10'. Dies führt dazu, dass bei einer erhöhten radialen Dicke des Steuerelementes 10' (geringerer radialer Abstand zwischen der Steuerfläche 12"' und der Mittelachse M) die Rollen 15"' in radialer Richtung nach innen (also in Richtung der Mittelachse M) gedrückt werden. Dies hat zur Folge, dass die mit den Rollen 15"' verbundenen Kolben 14"' in die ihnen zugeordneten Zylinder 13"' gepresst werden und hierbei das in den Zylindern 13"' befindliche Fluid verdrängen. Andererseits führt eine verringerte radiale Dicke des Steuerelementes 10' (geringerer radialer Abstand zwischen der Steuerfläche 12"' und der Mittelachse M) dazu, dass die Rollen 15"' in radialer Richtung nach innen (also in Richtung der Mittelachse M) bewegt werden können. Hierzu weist die Radialkolbenpumpe 42 zwölf Federn 16 auf, die derart angeordnet sind, dass sie die Kolben 14"' aus den Zylindern 13"' herausdrücken. Beispielsweise ist um jeden Kolben 14"' eine Schraubenfeder 16 herumgeführt. Die Federkräfte haben zur Folge, dass die Rollen 15"' stets der Kontur der Steuerfläche 12"' folgen und die mit den Rollen 15"' verbundenen Kolben 14"' wieder aus den ihnen zugeordneten Zylindern 13"' herausgezogen werden, wobei sich das Zylindervolumen wieder vergrößert. Die Rollen 15" sind also derart gelagert, dass sie auf der Steuerfläche 12"' des Steuerelementes 10' abrollen.

Bei der in Fig. 7A und in Fig. 7B gezeigten Radialkolbenpumpe 42 kann also durch eine Drehung des Steuerelements 10' das Volumen in den Zylindern 13"' zyklisch verändert werden. Um die zyklische Veränderung der Zylindervolumina für die Förderung eines Fluids nutzen zu können, weist jeder Zylinder 13"' einen Einlass 17"' mit einer Einlassleitung 18"' und einen Auslass 19"' mit einer Auslassleitung 20"' auf. Die Einlassleitungen 18"' aller Zylinder 13"' werden zu einem gemeinsamen Sauganschluss 21' zusammengeführt. In ähnlicher Weise werden die Auslassleitungen 20"' der Zylinder 13"' zu einem gemeinsamen Druckanschluss 22"' zusammengeführt.

Die in Fig. 7A und in Fig. 7B gezeigte Radialkolbenpumpe 42 weist einen drehfest gelagerten Stützring 44 auf, der beispielsweise mit dem Gestell 2' verbunden ist. An dem Stützring 44 sind Längslenker 45 drehbar gelagert, die ebenfalls drehbar gelagert mit den Rollen 15"' verbunden sind. Vorzugsweise ist jeder Rolle 15"' ein eigener Längslenker 45 zugeordnet, so dass die Anzahl der Längslenker 45 der Anzahl der Rollen 15"' entsprechen kann. Die Längslenker 45 dienen dem Zweck, in Umfangsrichtung verlaufende Kräfte aufzunehmen und die Zylinder 13"' sowie die Kolben 14"' weitgehend frei von Querkräften zu halten. Der Stützring 44 ist in Fig. 7A gut erkennbar und die Längslenker 45 sind in Fig. 7A gut erkennbar.

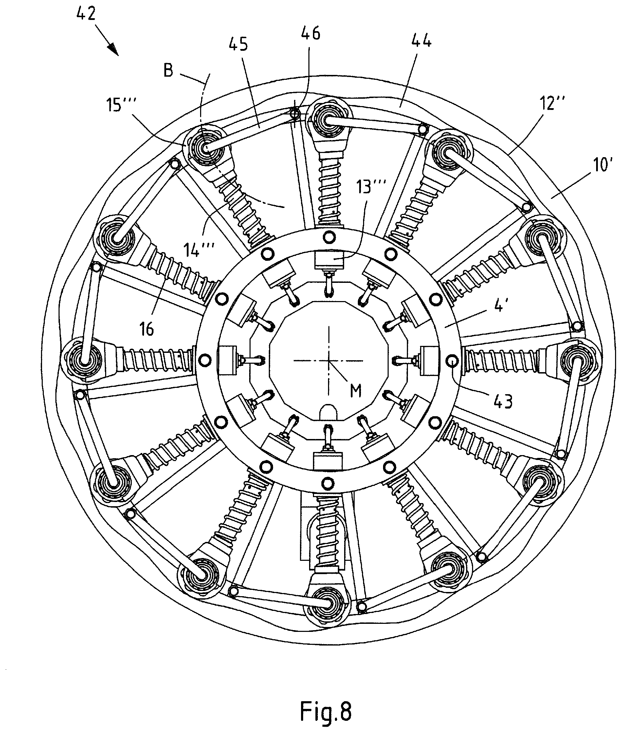

In Fig. 8 ist die Radialkolbenpumpe 42 aus Fig. 7A in einer Vorderansicht dargestellt. Diejenigen Bereiche der Radialkolbenpumpe 42, die bereits im Zusammenhang mit Fig. 7A und Fig. 7B beschrieben wurden, sind in Fig. 8 - und in allen weiteren Figuren - mit entsprechenden Bezugszeichen versehen. Die Vorderansicht erlaubt einen Blick auf die Längslenker 45: Jeder Längslenker 45 ist über eine Anlenkpunkt 46 drehbar mit dem Stützring 44 verbunden. Dies führt dazu, dass sich die an dem anderen Ende der Längslenker 45 drehbar gelagerten Rollen 15"' nur entlang einer (in Fig. 8 schematisch dargestellten) Kreisbahn B bewegen können. Dies hat zur Folge, dass die "Pumpenelemente" (also die Einheiten aus Zylindern 13"' und Kolben 14"') beim Abrollen der Rollen 15"' auf der Steuerfläche 12"' des Steuerelements 10' leicht in die Umfangsrichtung und gegen die Umfangsrichtung geschwenkt werden. Die Schwenkbarkeit der "Pumpenelemente" wird dadurch ermöglicht, dass die Zylinder 13"' durch die Lagerungen 43 schwenkbar mit dem Gestell 2' verbunden sind. Die "Pumpenelemente" sind also nicht in jeder Stellung exakt radial angeordnet; da die Abweichungen jedoch minimal sind, kann gleichwohl von einer "Radialkolbenpumpe" gesprochen werden.

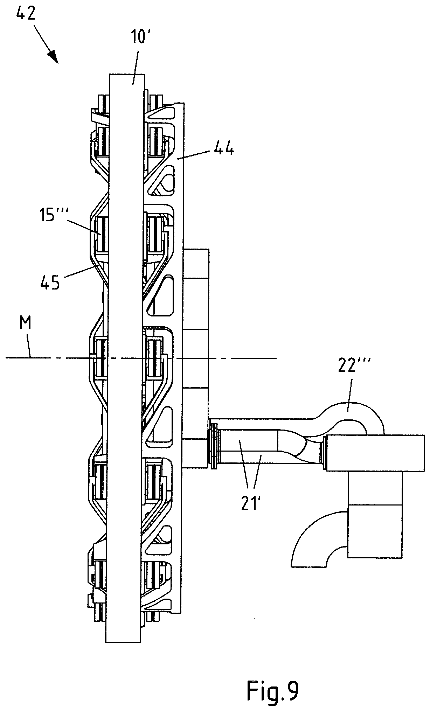

Fig. 9 zeigt die Radialkolbenpumpe 42 aus Fig. 7A in einer Seitenansicht. Auch in Fig. 9 sind diejenigen Bereiche der Radialkolbenpumpe 42, die bereits im Zusammenhang mit Fig. 7A bis Fig. 8 beschrieben wurden, mit entsprechenden Bezugszeichen versehen. In der Seitenansicht ist in axialer Richtung besonders schmale Bauform der Radialkolbenpumpe 42 erkennbar. Zudem sind an der Rückseite der Radialkolbenpumpe 42 die Sauganschlüsse 21' und der Druckanschluss 22"' erkennbar. Weiterhin zeigt die Seitenansicht, dass die Längslenker 45 gabelförmig (bzw. Y-förmig) ausgebildet sein können, und die Rollen 15"' somit beidseitig einspannen und sicher führen können.

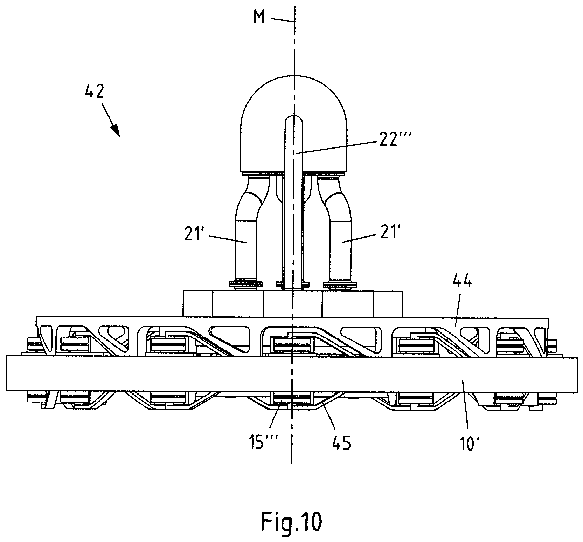

In Fig. 10 ist die Radialkolbenpumpe 42 aus Fig. 7A in einer Draufsicht dargestellt. Auch in Fig. 10 sind diejenigen Bereiche der Radialkolbenpumpe 42, die bereits im Zusammenhang mit Fig. 7A bis Fig. 7B beschrieben wurden, mit entsprechenden Bezugszeichen versehen. Auch in der Draufsicht ist die in Richtung der Mittelachse M sehr schlanke Bauform der Radialkolbenpumpe 42 gut erkennbar. Ebenso sind die an der Rückseite vorgesehenen Anschlüsse (Sauganschluss 21', Druckanschlüsse 22"') gut erkennbar.

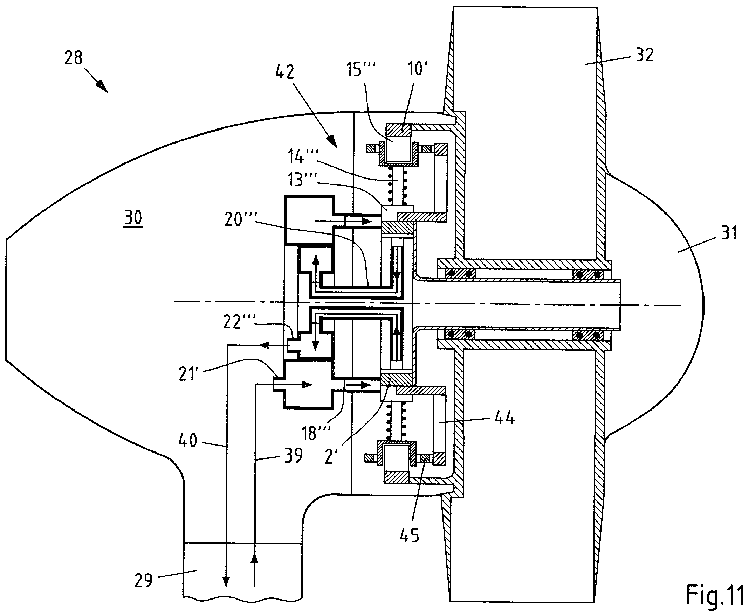

Fig. 11 zeigt schließlich die Verwendung der Radialkolbenpumpe 42 aus Fig. 7A in einer Offshore-Windkraftanlage 28 in einer schematischen Darstellung. Als Ergänzung zu dem in Fig. 6 gezeigten schematischen Gesamtaufbau soll Fig. 11 ein Blick in das Innere der Gondel 30 der Windkraftanlage 28 erlauben. Auch in Fig. 11 sind diejenigen Bereiche der Radialkolbenpumpe 42, die bereits zuvor beschrieben wurden, mit entsprechenden Bezugszeichen versehen. Die bereits im Zusammenhang mit Fig. 6 beschriebene Niederdruckleitung 39 leitet Wasser zu dem Turm 29 und zu der in der Gondel 30 angeordneten Radialkolbenpumpe 42. Dort ist die Niederdruckleitung 39 an die bereits zuvor beschriebenen Sauganschlüsse 21' der Radialkolbenpumpe 42 angeschlossen. Der Rotor 31 ist unmittelbar mit dem Steuerelement 10' der Radialkolbenpumpe 42 verbunden, so dass eine Rotation des Rotors 31 zu einer Rotation des Steuerelements 10' führt. Vorzugsweise ist der Rotor 31 direkt mit dem Steuerelement 10' der Radialkolbenpumpen 42 verbunden, so dass keine Wandlung der Drehzahlen und Drehmomente erfolgt. In der Radialkolbenpumpe 42 erfolgt eine deutliche Erhöhung des Druckes des Wassers, das die Radialkolbenpumpen 42 durch den Druckanschluss 22"' verlässt und von dort durch die Hochdruckleitung 40 zu einer (in Fig. 11 nicht dargestellten) Turbine 35 gepumpt.

### Bezugszeichenliste:

- 1:: Axialkolbenpumpe
- 2, 2':: Gestell
- 3:: Standfuß
- 4, 4':: Vorderwand
- 5, 5':: Rückwand
- 6, 6':: Distanzstange
- 7:: Antriebswelle
- 8:: Flansch
- 9:: Lager
- 10, 10':: Steuerelement
- 11:: Speiche
- 12', 12", 12"':: Steuerfläche
- 13', 13", 13"':: Zylinder
- 14', 14", 14"':: Kolben
- 15', 15", 15"':: Rolle
- 16:: Feder
- 17', 17", 17"':: Einlass
- 18', 18", 18"':: Einlassleitung
- 19', 19", 19"':: Auslass
- 20', 20", 20"':: Auslassleitung
- 21, 21':: Sauganschluss
- 22', 22", 22"':: Druckanschluss
- 23:: Nabe
- 24:: Öffnung
- 25:: Gabel
- 26:: Innenraum
- 27A, 27B:: Ventil
- 28:: Windkraftanlage
- 29:: Turm
- 30:: Gondel
- 31:: Rotor
- 32:: Rotorblatt
- 33:: Plattform
- 34:: Versorgungspumpe
- 35:: Turbine
- 36:: elektrischer Generator
- 37:: elektrischer Wandler
- 38:: Versorgungsleitung
- 39:: Niederdruckleitung
- 40:: Hochdruckleitung
- 41:: Hochspannungsleitung
- 42:: Radialkolbenpumpe
- 43:: Lagerung
- 44:: Stützring
- 45:: Längslenker
- 46:: Anlenkpunkt

- B:: Bahn
- K:: Kolbenachse
- M:: Mittelachse
- S:: Symmetrieebene
- Z:: Zylinderachse

## Patentansprüche

1. Kolbenpumpe, insbesondere Axialkolbenpumpe (1) oder Radialkolbenpumpe (42) mit großer Fördermenge bei geringer Drehzahl, umfassend:
- ein Gestell (2, 2'),
- ein Steuerelement (10, 10'), das um eine Mittelachse (M) herum drehbar gelagert ist und wenigstens eine Steuerfläche (12', 12", 12"') aufweist,
- mehrere Zylinder (13', 13", 13"') mit jeweils einem darin verschiebbaren Kolben (14', 14", 14"'),
- einen Sauganschluss (21, 21') zum Einströmen eines Fluids in die Zylinder (13', 13", 13"') der Kolbenpumpe (1, 42), und
- einen Druckanschluss (22', 22", 22"') zum Ausströmen des Fluids aus den Zylindern (13', 13", 13"') der Kolbenpumpe (1, 42),
- wobei die Zylinder (13', 13", 13"') durch Leitungen (18', 18", 18"', 20', 20", 20"') mit dem Sauganschluss (21, 21') und mit dem Druckanschluss (22', 22", 22"') verbunden sind,
- wobei die Zylinder (13', 13", 13"'), die Kolben (14', 14", 14"') und das Steuerelement (10, 10') derart gestaltet und angeordnet sind, dass die Stellungen der Kolben (14', 14", 14"') in den Zylindern (13', 13", 13"') durch eine Bewegung des Steuerelementes (10, 10') veränderbar sind,
- wobei die Zylinder (13', 13", 13"') und die Kolben (14', 14", 14"') derart gelagert sind, dass sich die Zylinder (13', 13", 13"') und die Kolben (14', 14", 14"') bei einer Drehung des Steuerelements (10, 10') nicht vollständig um die Mittelachse (M) herum mitdrehen, und
- wobei die Zylinder (13', 13", 13"') oder die Kolben (14', 14", 14"') mit jeweils einer drehbar gelagerten Rolle (15', 15", 15"') verbunden sind
**dadurch gekennzeichnet, dass**
der Kontaktbereich zwischen den Rollen (15', 15", 15"') und der Steuerfläche (12', 12", 12"') des Steuerelements (10, 10') schmiermittelfrei ist, so dass kein abzudichtender Ölraum um den Kontaktbereich herum gebildet ist.

2. Kolbenpumpe nach Anspruch 1,
**dadurch gekennzeichnet, dass**
die Zylinder (13', 13", 13"') oder die Kolben (14', 14", 14"') relativ zu dem Gestell (2, 2') ortsfest und/oder schwenkbar angeordnet sind.

3. Kolbenpumpe nach Anspruch 1 oder Anspruch 2,
**dadurch gekennzeichnet, dass**
das Gestell (2, 2') eine Vorderwand (4, 4') und eine Rückwand (5, 5') zur Lagerung der Zylinder (13', 13', 13") aufweist.

4. Kolbenpumpe nach einem der Ansprüche 1 bis 3,
**dadurch gekennzeichnet, dass**
die Zylinderachsen (Z) und die Kolbenachsen (K) koaxial verlaufen.

5. Kolbenpumpe nach einem der Ansprüche 1 bis 4,
**dadurch gekennzeichnet, dass**
die Steuerfläche (12', 12", 12"') des Steuerelements (10, 10') derart gestaltet ist, dass mehrere Hübe pro Umdrehung ausgeführt werden.

6. Kolbenpumpe nach einem der Ansprüche 1 bis 5,
**dadurch gekennzeichnet, dass**
die Kolben (14', 14", 14"') eine Feder (16) zum Herausfahren der Kolben (14', 14", 14"') aus den Zylindern (13', 13", 13"') aufweisen.

7. Kolbenpumpe (1) nach einem der Ansprüche 1 bis 6,
**dadurch gekennzeichnet, dass**
die Zylinderachsen (Z) und die Kolbenachsen (K) parallel zur Mittelachse (M) verlaufen.

8. Kolbenpumpe (1) nach einem der Ansprüche 1 bis 7,
**gekennzeichnet durch**
eine erste Gruppe aus wenigstens einem, vorzugsweise aus wenigstens zwei Zylindern (13') mit jeweils einem darin bewegbaren Kolben (14'), und eine zweite Gruppe aus wenigstens einem, vorzugsweise aus wenigstens zwei Zylindern (13") mit jeweils einem darin bewegbaren Kolben (14").

9. Kolbenpumpe (1) nach Anspruch 8,
**dadurch gekennzeichnet, dass**
die erste Gruppe aus Zylindern (13') mit deren Kolben (14') und die zweite Gruppe aus Zylindern (13") mit deren Kolben (14") in axialer Richtung auf unterschiedlichen Seiten des Steuerelementes (10) angeordnet sind.

10. Kolbenpumpe (1) nach einem der Ansprüche 7 bis 9,
**dadurch gekennzeichnet, dass**
die Steuerflächen (12', 12") des Steuerelementes (10) in axiale Richtung gerichtet sind und ihr axialer Abstand zu den Zylindern (13', 13") durch eine Drehung des Steuerelements (10) um die Mittelachse (M) veränderbar ist.

11. Kolbenpumpe (42) nach einem der Ansprüche 1 bis 6,
**dadurch gekennzeichnet, dass**
die Zylinderachsen (Z) und die Kolbenachsen (K) radial zur Mittelachse (M) verlaufen.

12. Kolbenpumpe (42) nach Anspruch 11,
**dadurch gekennzeichnet, dass**
das Steuerelement (10') in radialer Richtung außerhalb der Zylinder (13"') und der Kolben (14"') angeordnet ist und diese ringförmig umgibt.

13. Kolbenpumpe (42) nach Anspruch 11 oder Anspruch 12,
**dadurch gekennzeichnet, dass**
die Steuerfläche (12"') des Steuerelementes (10') in radialer Richtung zur Mittelachse (M) gerichtet ist und ihr axialer Abstand zu den Zylindern (13"') durch eine Drehung des Steuerelements (10') um die Mittelachse (M) veränderbar ist.

14. Kolbenpumpe (42) nach einem der Ansprüche 11 bis 13,
**gekennzeichnet durch**
Längslenker (45) zur Führung der Rollen (45), wobei vorzugsweise jeder Rolle (45) ein Längslenker zugeordnet ist.

15. Kolbenpumpe nach Anspruch 14,
**dadurch gekennzeichnet, dass**
die Längslenker (45) drehbar an einem ortfesten Stützring (44) gelagert sind.

16. Verwendung einer Kolbenpumpe in einer Windkraftanlage (28),
**dadurch gekennzeichnet, dass**
eine Kolbenpumpe (1, 42) nach einem der Ansprüche 1 bis 15 verwendet wird und dass als Pumpmedium Wasser, insbesondere Meerwasser verwendet wird.

17. Verwendung nach Anspruch 16,
**dadurch gekennzeichnet, dass**
die Windkraftanlage (28) einen Turm (29) mit einer Gondel (30) und einem Rotor (31), eine Kolbenpumpe und eine Turbine (35) aufweist, wobei der Rotor (31) mit der Kolbenpumpe mechanisch verbunden ist und wobei die Kolbenpumpe und die Turbine (35) durch Fluidleitungen (39, 40) miteinander verbunden sind.

18. Verwendung nach Anspruch 17,
**dadurch gekennzeichnet, dass**
die Kolbenpumpe (1, 41) in der Gondel (30) angeordnet ist und dass die Turbine (35) außerhalb der Gondel (30) und außerhalb des Turmes (29) angeordnet ist.

19. Verwendung nach Anspruch 17 oder 18,
**dadurch gekennzeichnet, dass**
die Windkraftanlage (28) einen elektrischen Generator (36) und einen elektrischen Wandler (37) aufweist, die außerhalb der Gondel (30) und außerhalb des Turmes (29) angeordnet sind.

20. Verwendung nach einem der Ansprüche 16 bis 19,
**dadurch gekennzeichnet, dass**
die Windkraftanlage (28) eine Versorgungspumpe (34) aufweist.

## Claims

1. Piston pump, in particular axial piston pump (1) or radial piston pump (42) with a high delivery rate at a low rotational speed, comprising:
- a frame (2, 2');
- a control element (10, 10') rotatably mounted about a central axis (M) having at least one control surface (12', 12", 12"'),
- a plurality of cylinders (13', 13", 13"'), each having pistons (14', 14", 14"') displaceable therein,
- a suction connection (21, 21') for an inflow of a fluid into the cylinders (13', 13", 13"') of the piston pump (1, 42), and
- a pressure connection (22', 22", 22"') for an outflow of the fluid out of the cylinders (13', 13", 13"') of the piston pump (1, 42),
- wherein the cylinders (13', 13", 13"') are connected by lines (18', 18", 18"', 20', 20", 20"') to the suction connection (21, 21') and to the pressure connection (22', 22", 22"'),
- wherein the cylinders (13', 13", 13"'), the pistons (14', 14", 14"') and the control element (10, 10') are configured and arranged in such a way that the positions of the pistons (14', 14", 14"') in the cylinders (13', 13", 13"') can be changed by a movement of the control element (10, 10'),
- wherein the cylinders (13', 13", 13"') and the pistons (14', 14", 14"') are mounted in such a way that the cylinders (13', 13", 13"') and the pistons (14', 14", 14"') do not rotate completely about the central axis (M) when the control element (10, 10') rotates, and
- wherein the cylinders (13', 13", 13"') or the pistons (14', 14", 14"') are connected respectively to a rotatably mounted roller (15', 15", 15"'),
**characterised in that** the contact region between the rollers (15', 15", 15"') and the control surface (12', 12", 12"') of the control element (10, 10') is lubricant-free such that an oil space which is to be sealed is not formed around the contact region.

2. Piston pump according to claim 1, **characterised in that** the cylinders (13', 13", 13"') or the pistons (14', 14", 14"') are arranged static and/or pivotable relative to the frame (2, 2').

3. Piston pump according to claim 1 or 2, **characterised in that** the frame (2, 2') has a front wall (4, 4') and a rear wall (5, 5') for mounting the cylinders (13', 13", 13"').

4. Piston pump according to any one of claims 1 to 3, **characterised in that** the cylinder axes (Z) and the piston axes (K) run coaxially.

5. Piston pump according to any one of claims 1 to 4, **characterised in that** the control surface (12', 12", 12"') of the control element (10, 10') is configured in such a way that a plurality of strokes is executed per revolution.

6. Piston pump according to any one of claims 1 to 5, **characterised in that** the pistons (14', 14", 14"') have a spring (16) for retraction of the pistons (14', 14", 14"') from the cylinders (13', 13", 13"').

7. Piston pump (1) according to any one of claims 1 to 6, **characterised in that** the cylinder axes (Z) and the piston axes (K) run parallel to the central axis (M).

8. Piston pump (1) according to any one of claims 1 to 7, **characterised by** a first group of at least one, preferably of at least two cylinders (13') having a piston (14') movable therein, and a second group of at least one, preferably of at least two cylinders (13") having a piston (14") movable therein.

9. Piston pump (1) according to claim 8, **characterised in that** the first group of cylinders (13') with their piston (14') and the second group of cylinders (13") with their piston (14") are arranged in the axial direction on different sides of the control element (10).

10. Piston pump (1) according to any one of claims 7 to 9, **characterised in that** the control surfaces (12', 12") of the control element (10) are directed in the axial direction and their axial distance to the cylinders (13', 13") can be modified by a rotation of the control element (10) about the central axis (M).

11. Piston pump (42) according to any one of claims 1 to 6, **characterised in that** the cylinder axes (Z) and the piston axes (K) run radially to the central axis (M).

12. Piston pump (42) according to claim 11, **characterised in that** the control element (10') is arranged in the radial direction outside of the cylinders (13"') and the piston (14"') and annularly surrounds them.

13. Piston pump (42) according to claim 11 or 12, **characterised in that** the control surface (12"') of the control element (10') is directed in a radial direction to the central axis (M) and its axial distance to the cylinders (13"') can be modified by a rotation of the control element (10') about the central axis (M).

14. Piston pump (42) according to any one of claims 11 to 13, **characterised by** trailing arms (45) for guiding the rollers (45), wherein each roller (45) is preferably assigned a trailing arm.

15. Piston pump according to claim 14, **characterised in that** the trailing arms (45) are rotatably mounted on a static support ring (44).

16. Use of a piston pump in a wind turbine (28), **characterised in that** a piston pump (1, 42) according to any one of claims 1 to 15 is used and **in that** water, in particular seawater, is used as the pump medium.

17. Use according to claim 16, **characterised in that** the wind turbine (28) has a tower (29) with a gondola (30) and a rotor (31), a piston pump and the turbine (35), wherein the rotor (31) is mechanically connected to the piston pump, and wherein the piston pump and the turbine (35) are connected to one another by fluid lines (39, 40).

18. Use according to claim 17, **characterised in that** the piston pump (1, 41) is arranged in the gondola (30) and **in that** the turbine (35) is arranged outside of the gondola (30) and outside of the tower (29).

19. Use according to claim 17 or 18, **characterised in that** the wind turbine (28) has an electric generator (36) and an electric transformer (37) which are arranged outside of the gondola (30) and outside of the tower (29).

20. Use according to any one of claims 16 to 19, **characterised in that** the wind turbine (28) has a supply pump (34).

## Revendications

1. Pompe à pistons, notamment une pompe à pistons axiaux (1) ou une pompe à pistons radiaux (42) à haut débit pour une vitesse de rotation faible, comprenant :
- un bâti (2, 2'),
- un élément de commande (10, 10') qui est monté rotatif autour d'un axe médian (M) et qui présente une surface de commande (12', 12", 12"'),
- plusieurs cylindres (13', 13", 13"') dans lesquels se déplace respectivement un piston (14', 14", 14"'),
- un raccordement d'aspiration (21, 21') servant à l'entrée d'un fluide dans les cylindres (13', 13", 13"') de la pompe à pistons (1, 42), et
- un raccordement de pression (22', 22", 22"') servant à l'évacuation du fluide hors des cylindres (13', 13", 13"') de la pompe à pistons (1, 42),
- les cylindres (13', 13", 13"') étant reliés au raccordement d'aspiration (21, 21') et au raccordement de pression (22', 22", 22"') par des conduites (18', 18", 18"', 20', 20", 20"'),
- les cylindres (13', 13", 13"'), les pistons (14', 14", 14"') et l'élément de commande (10, 10') étant conçus et agencés de telle manière que la position des pistons (14', 14", 14"') dans les cylindres (13', 13", 13"') peut être modifiée par un mouvement de l'élément de commande (10, 10'), et
- les cylindres (13', 13", 13"') et les pistons (14', 14", 14"') étant montés de telle manière que les cylindres (13', 13", 13"') et les pistons (14', 14", 14"') ne tournent pas entièrement ensemble autour de l'axe médian (M) lors d'un mouvement de rotation de l'élément de commande (10, 10'), et
- les cylindres (13', 13", 13"') ou les pistons (14', 14", 14"') étant reliés respectivement à un rouleau monté rotatif (15', 15", 15"'),
**caractérisée en ce que**
la zone de contact entre les rouleaux (15', 15", 15"') et la surface de commande (12', 12", 12"') de l'élément de commande (10, 10') est exempte de lubrifiant de sorte qu'aucun compartiment à huile à étanchéifier ne se forme autour de la zone de contact.

2. Pompe à pistons selon la revendication 1,
**caractérisée en ce que**
les cylindres (13', 13", 13"') ou les pistons (14', 14", 14"') sont agencés fixes et/ou pivotants par rapport au bâti (2, 2').

3. Pompe à pistons selon la revendication 1 ou la revendication 2,
**caractérisée en ce que**
le bâti (2, 2') présente une paroi avant (4, 4') et une paroi arrière (5, 5') pour le logement des cylindres (13', 13", 13"').

4. Pompe à pistons selon l'une des revendications 1 à 3,
**caractérisée en ce que**
les axes de cylindre (Z) et les axes de piston (K) passent de manière coaxiale.

5. Pompe à pistons selon l'une des revendications 1 à 4,
**caractérisée en ce que**
la surface de commande (12', 12", 12"') de l'élément de commande (10, 10') est conçue de telle manière que plusieurs courses par tour sont effectuées.

6. Pompe à pistons selon l'une des revendications 1 à 5,
**caractérisée en ce que**
les pistons (14', 14", 14"') présentent un ressort (16) pour retirer les pistons (14', 14", 14"') hors des cylindres (13', 13", 13"').

7. Pompe à pistons (1) selon l'une des revendications 1 à 6,
**caractérisée en ce que**
l'axe de cylindre (Z) et l'axe de piston (K) passent parallèlement par rapport à l'axe médian (M).

8. Pompe à pistons (1) selon l'une des revendications 1 à 7,
**caractérisée par**
un premier groupe constitué par au moins un, de préférence, constitué par au moins deux cylindres (13') avec respectivement un piston (14') étant mobile à leur intérieur, et un deuxième groupe constitué par au moins un, de préférence, par au moins deux cylindres (13") avec respectivement un piston (14") mobile à leur intérieur.

9. Pompe à pistons (1) selon la revendication 8,
**caractérisée en ce que**
le premier groupe, constitué de cylindres (13') avec ses pistons (14'), et le deuxième groupe, constitué de cylindres (13") avec ses pistons (14"), sont agencés en direction axiale sur des côtés différents de l'élément de commande (10).

10. Pompe à pistons (1) selon l'une des revendications 7 à 9,
**caractérisée en ce que**
les surfaces de commande (12', 12") de l'élément de commande (10) sont orientées en direction axiale et leur distance axiale par rapport aux cylindres (13', 13") peut être modifiée par une rotation de l'élément de commande (10) autour de l'axe médian (M).

11. Pompe à pistons (1) selon l'une des revendications 1 à 6,
**caractérisée en ce que**
les axes de cylindre (Z) et les axes de piston (K) passent de manière radiale par rapport à l'axe médian (M).

12. Pompe à pistons (42) selon la revendication 11,
**caractérisée en ce que**
l'élément de commande (10') est agencé en direction radiale à l'extérieur du cylindre (13"') et des pistons (14"') et les entoure de façon annulaire.

13. Pompe à pistons (42) selon la revendication 11 ou la revendication 12, **caractérisée en ce que**
la surface de commande (12"') de l'élément de commande (10') est orientée en direction axiale par rapport à l'axe médiane (M) et sa distance axiale par rapport aux cylindres (13"') peut être modifiée par une rotation de l'élément de commande (10') autour de l'axe médian (M).

14. Pompe à pistons (42) selon l'une des revendications 11 à 13,
**caractérisée par**
des bras longitudinaux (45) pour le guidage des rouleaux (45), un bras longitudinal étant associé, de préférence, à chaque rouleau (45).

15. Pompe à pistons selon la revendication 14,
**caractérisée en ce que**
les bras longitudinaux (45) sont agencés de manière rotative sur un anneau de support (44) fixe.

16. Utilisation d'une pompe à pistons dans un parc d'éoliennes (28), **caractérisée en ce que**
une pompe à pistons (1, 42) est utilisée conformément à une des revendications 1 à 15 et **en ce que** l'on utilise en tant que fluide pompé de l'eau, notamment de l'eau de mer.

17. Utilisation selon la revendication 16,
**caractérisée en ce que**
le parc d'éoliennes (28) présente un mât (29) avec une nacelle (30) et un rotor (31), une pompe à pistons et une turbine (35), le rotor (31) étant relié mécaniquement à la pompe à pistons et la pompe à pistons et la turbine (35) étant mutuellement reliées par des conduites de fluide (39, 40).

18. Utilisation selon la revendication 18,
**caractérisée en ce que**
la pompe à pistons (1, 41) est agencée dans la nacelle (30) et **en ce que** la turbine (35) est agencée à l'extérieur de la nacelle (30) et à l'extérieur du mât (29).

19. Utilisation selon la revendication 17 ou 18,
**caractérisée en ce que**
le parc d'éoliennes (28) présente un générateur électrique (36) et un convertisseur électrique (37) qui sont agencés à l'extérieur de la nacelle (30) et à l'extérieur du mât (29).

20. Utilisation selon l'une des revendications 16 à 19,
**caractérisée en ce que**
le parc d'éoliennes (28) présente une pompe d'alimentation (34).
